# EUROPEAN PATENT SPECIFICATION

(11) **EP 4 211 948 B1**
(45) Date of publication and mention of the grant of the patent: **29.07.2026**
(21) Application number: 21770401.4
(22) Date of filing: 25.08.2021
(51) Int. Cl.: H04W 64/00, H04B 7/06, H04B 7/08, H04W 16/28, H04W 52/02

(54) **METHODS AND APPARATUS FOR RECEIVE ANTENNA ADAPTATION FOR USER EQUIPMENT POWER SAVING**
VERFAHREN UND VORRICHTUNG ZUR EMPFANGSANTENNENANPASSUNG FÜR ENERGIESPAREN BEI BENUTZERGERÄTEN
PROCÉDÉS ET APPAREIL D'ADAPTATION D'ANTENNE DE RÉCEPTION POUR ÉCONOMIE D'ÉNERGIE D'ÉQUIPEMENT UTILISATEUR

(30) Priority: 08.09.2020 IN 202021038645
(43) Date of publication of application: 19.07.2023
(73) Proprietor: QUALCOMM INCORPORATED, San Diego, California 92121-1714 (US)
(72) Inventor: DUAN, Weimin, San Diego, California 92121-1714 (US); KUMAR, Mukesh, San Diego, California 92121-1714 (US); MANOLAKOS, Alexandros, San Diego, California 92121-1714 (US)
(74) Representative: Reddie & Grose LLP
(86) International application number: PCT/US2021/047607
(87) International publication number: WO 2022/055710

(56) References cited:
- US-A1- 2020 145 977
- QUALCOMM INCORPORATED: "Summary of [AT109e][624][POS] Open issues on UE-based downlink positioning assistance data", vol. RAN WG2, no. Online; 20200224 - 20200306, 11 March 2020 (2020-03-11), XP051864585, Retrieved from the Internet <URL:https://ftp.3gpp.org/tsg_ran/WG2_RL2/TSGR2_109_e/Docs/R2-2001949.zip R2-201949_(624-Open Issues UE-Based AD).docx> [retrieved on 20200311]
- QUALCOMM INCORPORATED: "Assistance Data for DL-only UE-based mode", vol. RAN WG2, no. Reno, Nevada, USA; 20191118 - 20191122, 8 November 2019 (2019-11-08), XP051817277, Retrieved from the Internet <URL:https://ftp.3gpp.org/tsg_ran/WG2_RL2/TSGR2_108/Docs/R2-1915563.zip R2-1915563_(Assistance Data for UE-based).docx> [retrieved on 20191108]
- QUALCOMM INCORPORATED: "Remaining details for UE-based downlink positioning assistance data", vol. RAN WG2, no. Online; 20200224 - 20200306, 14 February 2020 (2020-02-14), XP051849561, Retrieved from the Internet <URL:https://ftp.3gpp.org/tsg_ran/WG2_RL2/TSGR2_109_e/Docs/R2-2001244.zip R2-2001244_(UE-Based Remaining Details).docx> [retrieved on 20200214]
- ZTE ET AL: "NR DL-TDOA positoning", vol. RAN WG2, no. Prague, Czech; 20190826 - 20190830, 16 August 2019 (2019-08-16), XP051767032, Retrieved from the Internet <URL:http://www.3gpp.org/ftp/tsg_ran/WG2_RL2/TSGR2_107/Docs/R2-1909225.zip> [retrieved on 20190816]
- HUAWEI ET AL: "Discussion on UE-based positioning", vol. RAN WG2, no. Online Meeting ;20200420 - 20200501, 10 April 2020 (2020-04-10), XP051871163, Retrieved from the Internet <URL:https://ftp.3gpp.org/tsg_ran/WG2_RL2/TSGR2_109bis-e/Docs/R2-2003064.zip R2-2003064 Discussion on UE-based positioning.docx> [retrieved on 20200410]
- CATT: "DL and UL Reference Signals for NR Positioning", vol. RAN WG1, no. Xi'an, China; 20190408 - 20190412, 3 April 2019 (2019-04-03), pages 1 - 27, XP051707421, Retrieved from the Internet <URL:http://www.3gpp.org/ftp/tsg%5Fran/WG1%5FRL1/TSGR1%5F96b/Docs/R1%2D1905346%2Ezip> [retrieved on 20190403]

## Description

### BACKGROUND

### Field:

Subject matter disclosed herein relates to positioning of user equipment using received positioning reference signals and more particularly to antenna adaptation for the user equipment based on the configuration of the positioning references signals.

### Information:

The location of a user equipment (UE), such as a cellular telephone, may be useful or essential to a number of applications including emergency calls, navigation, direction finding, asset tracking and Internet service. The location of a UE may be estimated based on information gathered from various systems. In a cellular network implemented according to 4G (also referred to as Fourth Generation) Long Term Evolution (LTE) radio access or 5G (also referred to as Fifth Generation) "New Radio" (NR), for example, a base station may transmit downlink reference signals that are used for positioning, such as a positioning reference signal (PRS). Assistance data is sent to a UE to assist in acquiring and measuring signals, and in some implementations, to compute a location estimate from the measurements. A UE may acquire PRSs transmitted from different base stations and perform positioning measurements such as Reference Signal Time Difference (RSTD), Reference Signal Received Power (RSRP), and reception and transmission (RX-TX) time difference measurements, which may be used in various positioning methods, such as Time Difference of Arrival (TDOA), Angle of Departure (AOD), and multi-cell Round Trip Time (RTT). The UE may compute an estimate of its own location using various positioning methods or may send the positioning measurements to a network entity, e.g., location server, which may compute the UE location based on the positioning measurements. Improvements in efficiency, e.g., power consumption and complexity, are desirable. Document QUALCOMM INCORPORATED: "Summary of [AT109e][624][POS] Open issues on UE-based downlink positioning assistance data", 3GPP DRAFT; R2-2001949, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Online; 20200224 - 20200306 11 March 2020 (2020-03-11), discusses beam width information, which can optionally be provided in assistance data as part of spatial direction information of the DL-PRS Resources, i.e. an information element IE NR-DL-PRS-BeamInfo including also azimuth and elevation angle information for PRS beams.. Document QUALCOMM INCORPORATED: "Assistance Data for DL-only UE-based mode", 3GPP DRAFT; R2-1915563, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Reno, Nevada, USA; 20191118 - 20191122 8 November 2019 (2019-11-08), discusses inclusion of spatial direction information of the DL-PRS resources in position calculation assistance data (e.g., azimuth, elevation, beamwidth).

### SUMMARY

A user equipment (UE) uses downlink positioning reference signals (PRS) beams for position measurements. The PRS beams may be transmitted using beamforming and transmitted in a beam-sweeping manner. The UE receives assistance data that includes PRS configuration information including the azimuth and elevation angles and beam width information for each PRS beam. The beam width information may include the beam width, boresight direction uncertainty, beam width uncertainty, and side lobe/ back lobe beam information. The UE may select or adapt the receive (Rx) antennas based on the beam width information to reduce power consumption, for example, by reducing the number of Rx antennas used to receive wide PRS beams, and selecting a larger number of Rx antennas when the PRS beams are narrow.

The invention is defined in the independent claims. Optional features are set out in the dependent claims.

Other objects and advantages associated with the aspects disclosed herein will be apparent to those skilled in the art based on the accompanying drawings and detailed description.

### BRIEF DESCRIPTION OF THE DRAWINGS

The accompanying drawings are presented to aid in the description of various aspects of the disclosure and are provided solely for illustration of the aspects and not limitation thereof.
FIG. 1A illustrates an exemplary wireless communications system, according to various aspects of the disclosure.
FIG. 1B shows an architecture diagram of an NG-RAN node that includes a gNB Central Unit, a gNB Distributed Unit, and gNB Remote Unit.
FIGS. 2A and 2B illustrate example wireless network structures, according to various aspects of the disclosure.
FIG. 3 illustrates a block diagram of a design of base station and user equipment (UE), which may be one of the base stations and one of the UEs in Fig. 1.
FIG. 4 shows a structure of an exemplary subframe sequence for a positioning reference signal (PRS).
FIG. 5 illustrates a UE capable of receiving assistance data including PRS beam width information and capable of adaptation of Rx antennas based on the beam width information.
FIG. 6 shows an example of a base station capable of providing PRS beam width information which may be included in positioning assistance data to the UE.
FIG. 7 shows a server capable of providing assistance data to the UE that includes PRS beam width information.
FIG. 8 illustrates a base station transmitting DL-PRS resources as a number of directional beams.
FIG. 9 illustrates the directionality of a PRS beam in a coordinate system.
FIG. 10 illustrates a downlink Angle of Departure (AOD) performed by a UE.
FIG. 11 illustrates a simulated beam pattern for the beam gain measured in FIG. 10 and a normalization of the relative beam gain with respect to beam index at a specific angle.
FIGs. 12A and 12B illustrate the UE receiving relatively narrow and relatively wide PRS beams and selecting a number of receive antennas to produce corresponding receive beams.
FIG. 13 illustrates an antenna adaptation of the UE to select a number of receive antennas based on the beam width information for a PRS beam.
FIG. 14 illustrates an antenna panel adaptation of the UE to select a number of receive antenna panels based on the beam width information for a PRS beam.
FIG. 15 is a message flow illustrating the messaging between the location server, a base station, and the UE for supporting positioning of the UE using beam width information and selection of Rx antennas based on the beam width information.
FIG. 16 shows a flowchart for an exemplary method for supporting positioning of a user equipment (UE) in a wireless network performed by the UE.
FIG. 17 shows a flowchart for an exemplary method for supporting positioning of a user equipment (UE) in a wireless network performed by the location server.

### DETAILED DESCRIPTION

Aspects of the disclosure are provided in the following description and related drawings directed to various examples provided for illustration purposes. Alternate aspects may be devised without departing from the scope of the disclosure. Additionally, well-known elements of the disclosure will not be described in detail or will be omitted so as not to obscure the relevant details of the disclosure.

The words "exemplary" and/or "example" are used herein to mean "serving as an example, instance, or illustration." Any aspect described herein as "exemplary" and/or "example" is not necessarily to be construed as preferred or advantageous over other aspects. Likewise, the term "aspects of the disclosure" does not require that all aspects of the disclosure include the discussed feature, advantage or mode of operation.

Those of skill in the art will appreciate that the information and signals described below may be represented using any of a variety of different technologies and techniques. For example, data, instructions, commands, information, signals, bits, symbols, and chips that may be referenced throughout the description below may be represented by voltages, currents, electromagnetic waves, magnetic fields or particles, optical fields or particles, or any combination thereof, depending in part on the particular application, in part on the desired design, in part on the corresponding technology, etc.

Further, many aspects are described in terms of sequences of actions to be performed by, for example, elements of a computing device. It will be recognized that various actions described herein can be performed by specific circuits (e.g., application specific integrated circuits (ASICs)), by program instructions being executed by one or more processors, or by a combination of both. Additionally, the sequence(s) of actions described herein can be considered to be embodied entirely within any form of non-transitory computer-readable storage medium having stored therein a corresponding set of computer instructions that, upon execution, would cause or instruct an associated processor of a device to perform the functionality described herein. Thus, the various aspects of the disclosure may be embodied in a number of different forms, all of which have been contemplated to be within the scope of the claimed subject matter. In addition, for each of the aspects described herein, the corresponding form of any such aspects may be described herein as, for example, "logic configured to" perform the described action.

As used herein, the terms "user equipment" (UE) and "base station" are not intended to be specific or otherwise limited to any particular Radio Access Technology (RAT), unless otherwise noted. In general, a UE may be any wireless communication device (e.g., a mobile phone, router, tablet computer, laptop computer, tracking device, wearable (e.g., smartwatch, glasses, augmented reality (AR) / virtual reality (VR) headset, etc.), vehicle (e.g., automobile, motorcycle, bicycle, etc.), Internet of Things (IoT) device, etc.) used by a user to communicate over a wireless communications network. A UE may be mobile or may (e.g., at certain times) be stationary, and may communicate with a Radio Access Network (RAN). As used herein, the term "UE" may be referred to interchangeably as an "access terminal" or "AT," a "client device," a "wireless device," a "subscriber device," a "subscriber terminal," a "subscriber station," a "user terminal" or UT, a "mobile terminal," a "mobile station," "mobile device," or variations thereof. Generally, UEs can communicate with a core network via a RAN, and through the core network the UEs can be connected with external networks such as the Internet and with other UEs. Of course, other mechanisms of connecting to the core network and/or the Internet are also possible for the UEs, such as over wired access networks, wireless local area network (WLAN) networks (e.g., based on IEEE 802.11, etc.) and so on.

A base station or transmission point or transmission reception point (TRP) may operate according to one of several RATs in communication with UEs depending on the network in which it is deployed, and may be alternatively referred to as an access point (AP), a network node, a NodeB, an evolved NodeB (eNB), a New Radio (NR) Node B (also referred to as a gNB or gNodeB), etc. In addition, in some systems a base station may provide purely edge node signaling functions while in other systems it may provide additional control and/or network management functions. A communication link through which UEs can send signals to a base station is called an uplink (UL) channel (e.g., a reverse traffic channel, a reverse control channel, an access channel, etc.). A communication link through which the base station can send signals to UEs is called a downlink (DL) or forward link channel (e.g., a paging channel, a control channel, a broadcast channel, a forward traffic channel, etc.). As used herein the term traffic channel (TCH) can refer to either an UL / reverse or DL / forward traffic channel.

The term "base station" may refer to a single physical transmission point or to multiple physical transmission points that may or may not be co-located. For example, where the term "base station" refers to a single physical transmission point, the physical transmission point may be an antenna of the base station corresponding to a cell of the base station. Where the term "base station" refers to multiple co-located physical transmission points, the physical transmission points may be an array of antennas (e.g., as in a multiple-input multiple-output (MIMO) system or where the base station employs beamforming) of the base station. Where the term "base station" refers to multiple non-co-located physical transmission points, the physical transmission points may be a distributed antenna system (DAS) (a network of spatially separated antennas connected to a common source via a transport medium) or a remote radio head (RRH) (a remote base station connected to a serving base station). Alternatively, the non-co-located physical transmission points may be the serving base station receiving the measurement report from the UE and a neighbor base station whose reference radio frequency (RF) signals the UE is measuring.

To support positioning of a UE, two broad classes of location solution have been defined: control plane and user plane. With control plane (CP) location, signaling related to positioning and support of positioning may be carried over existing network (and UE) interfaces and using existing protocols dedicated to the transfer of signaling. With user plane (UP) location, signaling related to positioning and support of positioning may be carried as part of other data using such protocols as the Internet Protocol (IP), Transmission Control Protocol (TCP) and User Datagram Protocol (UDP).

The Third Generation Partnership Project (3GPP) has defined control plane location solutions for UEs that use radio access according to Global System for Mobile communications GSM (2G), Universal Mobile Telecommunications System (UMTS) (3G), LTE (4G) and New Radio (NR) for Fifth Generation (5G). These solutions are defined in 3GPP Technical Specifications (TSs) 23.271 and 23.273 (common parts), 43.059 (GSM access), 25.305 (UMTS access), 36.305 (LTE access) and 38.305 (NR access). The Open Mobile Alliance (OMA) has similarly defined a UP location solution known as Secure User Plane Location (SUPL) which can be used to locate a UE accessing any of a number of radio interfaces that support IP packet access such as General Packet Radio Service (GPRS) with GSM, GPRS with UMTS, or IP access with LTE or NR.

Both CP and UP location solutions may employ a location server to support positioning. The location server may be part of or accessible from a serving network or a home network for a UE or may simply be accessible over the Internet or over a local Intranet. If positioning of a UE is needed, a location server may instigate a session (e.g. a location session or a SUPL session) with the UE and coordinate location measurements by the UE and determination of an estimated location of the UE. During a location session, a location server may request positioning capabilities of the UE (or the UE may provide them to the location server without a request), may provide assistance data to the UE (e.g. if requested by the UE or in the absence of a request) and may request a location estimate or location measurements from a UE for various positioning techniques, e.g. for the Global Navigation Satellite System (GNSS), Time Difference of Arrival (TDOA), Angle of Departure (AOD), Round Trip Time (RTT) and multi cell RTT (Multi-RTT), and/or Enhanced Cell ID (ECID) position methods. Assistance data may be used by a UE to acquire and measure GNSS and/or reference signals, such as positioning reference signals (PRS) signals (e.g. by providing expected characteristics of these signals such as frequency, expected time of arrival, signal coding, signal Doppler).

In a UE based mode of operation, assistance data may also or instead be used by a UE to help determine a location estimate from the resulting location measurements (e.g., if the assistance data provides satellite ephemeris data in the case of GNSS positioning or base station locations and other base station characteristics such as PRS timing in the case of terrestrial positioning using, e.g., TDOA, AOD, Multi-RTT, etc.).

In a UE assisted mode of operation, a UE may return location measurements to a location server which may determine an estimated location of the UE based on these measurements and possibly based also on other known or configured data (e.g. satellite ephemeris data for GNSS location or base station characteristics including base station locations and possibly PRS timing in the case of terrestrial positioning using , e.g., TDOA, AOD, Multi-RTT, etc.).

In another standalone mode of operation, a UE may make location related measurements without any positioning assistance data from a location server and may further compute a location or a change in location without any positioning assistance data from a location server. Position methods that may be used in a standalone mode include GPS and GNSS (e.g. if a UE obtains satellite orbital data from data broadcast by GPS and GNSS satellites themselves) as well as sensors.

In the case of 3GPP CP location, a location server may be an enhanced serving mobile location center (E-SMLC) in the case of LTE access, a standalone SMLC (SAS) in the case of UMTS access, a serving mobile location center (SMLC) in the case of GSM access, or a Location Management Function (LMF) in the case of 5G NR access. In the case of OMA SUPL location, a location server may be a SUPL Location Platform (SLP) which may act as any of: (i) a home SLP (H-SLP) if in or associated with the home network of a UE or if providing a permanent subscription to a UE for location services; (ii) a discovered SLP (D-SLP) if in or associated with some other (non-home) network or if not associated with any network; (iii) an Emergency SLP (E-SLP) if supporting location for an emergency call instigated by the UE; or (iv) a visited SLP (V-SLP) if in or associated with a serving network or a current local area for a UE.

During a location session, a location server and UE may exchange messages defined according to some positioning protocol in order to coordinate the determination of an estimated location. Possible positioning protocols may include, for example, the LTE Positioning Protocol (LPP) defined by 3GPP in 3GPP TS 36.355 and the LPP Extensions (LPPe) protocol defined by OMA in OMA TSs OMA-TS-LPPe-V1_0, OMA-TS-LPPe-V1_1 and OMA-TS-LPPe-V2_0. The LPP and LPPe protocols may be used in combination where an LPP message contains one embedded LPPe message. The combined LPP and LPPe protocols may be referred to as LPP/LPPe. LPP and LPP/LPPe may be used to help support the 3GPP control plane solution for LTE or NR access, in which case LPP or LPP/LPPe messages are exchanged between a UE and E-SMLC or between a UE and LMF. LPP or LPPe messages may be exchanged between a UE and E-SMLC via a serving Mobility Management Entity (MME) and a serving eNodeB for the UE. LPP or LPPe messages may also be exchanged between a UE and LMF via a serving Access and Mobility Management Function (AMF) and a serving NR Node B (gNB) for the UE. LPP and LPP/LPPe may also be used to help support the OMA SUPL solution for many types of wireless access that support IP messaging (such as LTE, NR and WiFi), where LPP or LPP/LPPe messages are exchanged between a SUPL Enabled Terminal (SET), which is the term used for a UE with SUPL, and an SLP, and may be transported within SUPL messages such as a SUPL POS or SUPL POS INIT message
A location server and a base station (e.g. an eNodeB for LTE access) may exchange messages to enable the location server to (i) obtain position measurements for a particular UE from the base station, or (ii) obtain location information from the base station not related to a particular UE such as the location coordinates of an antenna for the base station, the cells (e.g. cell identities) supported by the base station, cell timing for the base station and/or parameters for signals transmitted by the base station such as PRS signals. In the case of LTE access, the LPP A (LPPa) protocol may be used to transfer such messages between a base station that is an eNodeB and a location server that is an E-SMLC. In the case of NR access, the NRPPA protocol may be used to transfer such messages between a base station that is a gNodeB and a location server that is an LMF. It is noted that the terms "parameter" and "information element" (IE) are synonymous and are used interchangeably herein.

To improve UE positioning using DL PRS, enhancements and solutions to support high accuracy, low latency, network efficiency, and device efficiency (power consumption, complexity, etc.) are desirable, particularly for commercial uses cases including general commercial use cases and specifically (I)IoT use cases. For example, improvements to

In Release 16 (Rel-16), it was agreed that the UE DL PRS processing capability is reported for maximum DL PRS bandwidth in MHz, including the duration of DL PRS symbols N in units of millisecond (ms) that a UE can process every T ms assuming maximum DL PRS bandwidth in MHz, and the maximum number of DL PRS resources that a UE can process in a slot. A UE is not expected to process DL PRS without configuration of measurement gap. A UE DL PRS processing capability is defined for a single positioning frequency layer. The UE capability for simultaneous DL PRS processing across positioning frequency layers is not supported in Rel-16.

For future releases, e.g., Release 17, it is desirable to evaluate UE power consumption for NR positioning. For example, adaptation of the number of Tx/Rx antenna (panels) used by the UE may provide up to 3%-30% power saving gain Accordingly, substantial improvements in device efficiency, particularly power consumption may be achieved through appropriate adaptation of Tx/Rx antennas during positioning.

During positioning using signaling in LTE and 5G NR, a UE typically acquires a dedicated positioning signals transmitted by base stations, e.g., PRS, which are used to generate the desired measurements for the supported positioning technique. Positioning Reference Signals (PRS) are defined for 5G NR positioning to enable UEs to detect and measure more neighbour base stations or Transmission and Reception Points (TRPs). Several configurations are supported to enable a variety of deployments (indoor, outdoor, sub-6, mmW). To support PRS beam operation, beam sweeping is additionally supported for PRS. Table 1 below illustrates 3GPP release numbers (e.g., Rel. 16 or Rel. 15) that define particular reference signals for various UE measurements and the accompanying positioning techniques.

**TABLE 1**

| DL/UL Reference Signals | UE Measurements | To facilitate support of the following positioning techniques |
|---|---|---|
| Rel.16 DL PRS | DL RSTD | DL-TDOA |
| Rel.16 DL PRS | DL PRS RSRP | DL-TDOA, DL-AOD, Multi-RTT |
| Rel.16 DL PRS / Rel.16 SRS for positioning | UE Rx-Tx time difference | Multi-RTT |
| Rel. 15 SSB / CSI-RS for RRM | SS-RSRP(RSRP for RRM), SS-RSRQ(for RRM), CSI-RSRP (for RRM), CSI-RSRQ (for RRM) | E-CID |

In 5G NR, the base stations, i.e., gNBs, may transmit PRS resources in a beam-sweeping manner. In other words, the gNBs may use beamforming and transmit PRS resources in specific directions. The UE may perform positioning measurements using the PRS resources. Assistance data may be provided to the UE, which includes PRS configuration information, to assist the UE in measuring the PRS resources. The PRS configuration information includes PRS beam information, such as the beam azimuth and elevation angles.

As described herein, the PRS configuration information for PRS beams may further include beam width information. The beam width information may be useful, e.g., to assist the UE in receiving the PRS beams or to adapt the Rx antennas. The beam width information, for example, may include the beam width of the PRS beam. In some implementations, the beam width may include spatial dimensions, e.g., in azimuth and elevation. The beam width information may also or alternatively include uncertainty information, such as a boresight direction uncertainty and beam width uncertainty. This information may likewise have spatial dimensions, e.g., in azimuth and elevation. The beam width information may also or alternatively include information about side lobes and/or back lobe that is associated with each beam.

The beam width information may be used by the UE to select the antennas for receiving the PRS beams. The knowledge of PRS beam width, as well as other beam pattern information, allow the UE to adapt the UE Rx antennas for the purpose of UE power saving. For example, if the PRS beam is wide angle beam, the UE may adapt the antennas to use a single (or reduced number) of antennas, which will be able to achieve a high quality positioning measurement. Reducing the number of antennas, e.g., to a single Rx antenna saves power consumption.

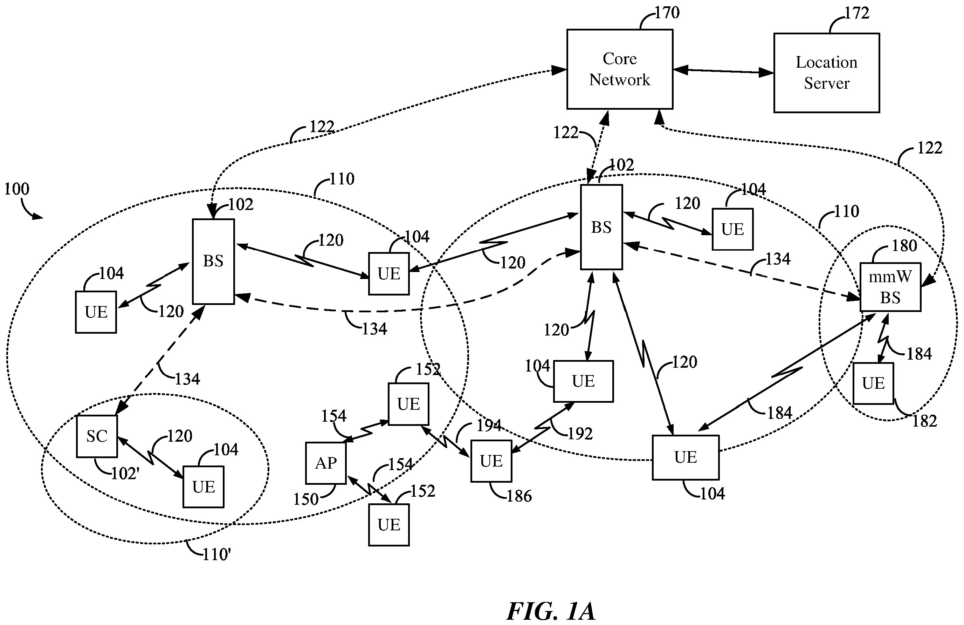

**FIG. 1A** illustrates an exemplary wireless communications system 100. The wireless communications system 100 (which may also be referred to as a wireless wide area network (WWAN)) may include various network nodes, including base stations and UEs. The base stations 102, sometimes referred to as TRPs 102, may include macro cell base stations (high power cellular base stations) and/or small cell base stations (low power cellular base stations). In an aspect, the macro cell base station may include eNBs where the wireless communications system 100 corresponds to an LTE network, or gNBs where the wireless communications system 100 corresponds to a 5G network, or a combination of both, and the small cell base stations may include femtocells, picocells, microcells, etc.

The base stations 102 may collectively form a RAN and interface with a core network 170 (e.g., an evolved packet core (EPC) or next generation core (NGC)) through backhaul links 122, and through the core network 170 to one or more location servers 172. In addition to other functions, the base stations 102 may perform functions that relate to one or more of transferring user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, RAN sharing, multimedia broadcast multicast service (MBMS), subscriber and equipment trace, RAN information management (RIM), paging, positioning, and delivery of warning messages. The base stations 102 may communicate with each other directly or indirectly (e.g., through the EPC / NGC) over backhaul links 134, which may be wired or wireless.

The base stations 102 may wirelessly communicate with the UEs 104. Each of the base stations 102 may provide communication coverage for a respective geographic coverage area 110. In an aspect, one or more cells may be supported by a base station 102 in each coverage area 110. A "cell" is a logical communication entity used for communication with a base station (e.g., over some frequency resource, referred to as a carrier frequency, component carrier, carrier, band, or the like), and may be associated with an identifier (e.g., a physical cell identifier (PCID), a virtual cell identifier (VCID)) for distinguishing cells operating via the same or a different carrier frequency. In some cases, different cells may be configured according to different protocol types (e.g., machine-type communication (MTC), narrowband IoT (NB-IoT), enhanced mobile broadband (eMBB), or others) that may provide access for different types of UEs. In some cases, the term "cell" may also refer to a geographic coverage area of a base station (e.g., a sector), insofar as a carrier frequency can be detected and used for communication within some portion of geographic coverage areas 110.

While neighboring macro cell base station 102 geographic coverage areas 110 may partially overlap (e.g., in a handover region), some of the geographic coverage areas 110 may be substantially overlapped by a larger geographic coverage area 110. For example, a small cell base station 102' may have a coverage area 110' that substantially overlaps with the coverage area 110 of one or more macro cell base stations 102. A network that includes both small cell and macro cell base stations may be known as a heterogeneous network. A heterogeneous network may also include home eNBs (HeNBs), which may provide service to a restricted group known as a closed subscriber group (CSG).

The communication links 120 between the base stations 102 and the UEs 104 may include UL (also referred to as reverse link) transmissions from a UE 104 to a base station 102 and/or downlink (DL) (also referred to as forward link) transmissions from a base station 102 to a UE 104. The communication links 120 may use MIMO antenna technology, including spatial multiplexing, beamforming, and/or transmit diversity. The communication links 120 may be through one or more carrier frequencies. Allocation of carriers may be asymmetric with respect to DL and UL (e.g., more or less carriers may be allocated for DL than for UL).

The wireless communications system 100 may further include a wireless local area network (WLAN) access point (AP) 150 in communication with WLAN stations (STAs) 152 via communication links 154 in an unlicensed frequency spectrum (e.g., 5 GHz). When communicating in an unlicensed frequency spectrum, the WLAN STAs 152 and/or the WLAN AP 150 may perform a clear channel assessment (CCA) prior to communicating in order to determine whether the channel is available.

The small cell base station 102' may operate in a licensed and/or an unlicensed frequency spectrum. When operating in an unlicensed frequency spectrum, the small cell base station 102' may employ LTE or 5G technology and use the same 5 GHz unlicensed frequency spectrum as used by the WLAN AP 150. The small cell base station 102', employing LTE / 5G in an unlicensed frequency spectrum, may boost coverage to and/or increase capacity of the access network. LTE in an unlicensed spectrum may be referred to as LTE-unlicensed (LTE-U), licensed assisted access (LAA), or MulteFire.

The wireless communications system 100 may further include a millimeter wave (mmW) base station 180 that may operate in mmW frequencies and/or near mmW frequencies in communication with a UE 182. Extremely high frequency (EHF) is part of the RF in the electromagnetic spectrum. EHF has a range of 30 GHz to 300 GHz and a wavelength between 1 millimeter and 10 millimeters. Radio waves in this band may be referred to as a millimeter wave. Near mmW may extend down to a frequency of 3 GHz with a wavelength of 100 millimeters. The super high frequency (SHF) band extends between 3 GHz and 30 GHz, also referred to as centimeter wave. Communications using the mmW/near mmW radio frequency band have high path loss and a relatively short range. The mmW base station 180 and the UE 182 may utilize beamforming (transmit and/or receive) over a mmW communication link 184 to compensate for the extremely high path loss and short range. Further, it will be appreciated that in alternative configurations, one or more base stations 102 may also transmit using mmW or near mmW and beamforming. Accordingly, it will be appreciated that the foregoing illustrations are merely examples and should not be construed to limit the various aspects disclosed herein.

Transmit beamforming is a technique for focusing an RF signal in a specific direction. Traditionally, when a network node (e.g., a base station) broadcasts an RF signal, it broadcasts the signal in all directions (omni-directionally). With transmit beamforming, the network node determines where a given target device (e.g., a UE) is located (relative to the transmitting network node) and projects a stronger downlink RF signal in that specific direction, thereby providing a faster (in terms of data rate) and stronger RF signal for the receiving device(s). To change the directionality of the RF signal when transmitting, a network node can control the phase and relative amplitude of the RF signal at each of the one or more transmitters that are broadcasting the RF signal. For example, a network node may use an array of antennas (referred to as a "phased array" or an "antenna array") that creates a beam of RF waves that can be "steered" to point in different directions, without actually moving the antennas. Specifically, the RF current from the transmitter is fed to the individual antennas with the correct phase relationship so that the radio waves from the separate antennas add together to increase the radiation in a desired direction, while cancelling to suppress radiation in undesired directions.

In receive beamforming, the receiver uses a receive beam to amplify RF signals detected on a given channel. For example, the receiver can increase the gain setting and/or adjust the phase setting of an array of antennas in a particular direction to amplify (e.g., to increase the gain level of) the RF signals received from that direction. Thus, when a receiver is said to beamform in a certain direction, it means the beam gain in that direction is high relative to the beam gain along other directions, or the beam gain in that direction is the highest compared to the beam gain in that direction of all other receive beams available to the receiver. This results in a stronger received signal strength (e.g., reference signal received power (RSRP), reference signal received quality (RSRQ), signal-to-interference-plus-noise ratio (SINR), etc.) of the RF signals received from that direction.

In 5G, the frequency spectrum in which wireless nodes (e.g., base stations 102/180, UEs 104/182) operate is divided into multiple frequency ranges, FR1 (from 450 to 6000 MHz), FR2 (from 24250 to 52600 MHz), FR3 (above 52600 MHz), and FR4 (between FR1 and FR2). In a multi-carrier system, such as 5G, one of the carrier frequencies is referred to as the "primary carrier" or "anchor carrier" or "primary serving cell" or "PCell," and the remaining carrier frequencies are referred to as "secondary carriers" or "secondary serving cells" or "SCells." In carrier aggregation, the anchor carrier is the carrier operating on the primary frequency (e.g., FR1) utilized by a UE 104/182 and the cell in which the UE 104/182 either performs the initial radio resource control (RRC) connection establishment procedure or initiates the RRC connection re-establishment procedure. The primary carrier carries all common and UE-specific control channels. A secondary carrier is a carrier operating on a second frequency (e.g., FR2) that may be configured once the RRC connection is established between the UE 104 and the anchor carrier and that may be used to provide additional radio resources. The secondary carrier may contain only necessary signaling information and signals, for example, those that are UE-specific may not be present in the secondary carrier, since both primary uplink and downlink carriers are typically UE-specific. This means that different UEs 104/182 in a cell may have different downlink primary carriers. The same is true for the uplink primary carriers. The network is able to change the primary carrier of any UE 104/182 at any time. This is done, for example, to balance the load on different carriers. Because a "serving cell" (whether a PCell or an SCell) corresponds to a carrier frequency / component carrier over which some base station is communicating, the term "cell," "serving cell," "component carrier," "carrier frequency," and the like can be used interchangeably.

For example, still referring to FIG. 1A, one of the frequencies utilized by the macro cell base stations 102 may be an anchor carrier (or "PCell") and other frequencies utilized by the macro cell base stations 102 and/or the mmW base station 180 may be secondary carriers ("SCells"). The simultaneous transmission and/or reception of multiple carriers enables the UE 104/182 to significantly increase its data transmission and/or reception rates. For example, two 20 MHz aggregated carriers in a multi-carrier system would theoretically lead to a two-fold increase in data rate (i.e., 40 MHz), compared to that attained by a single 20 MHz carrier.

The wireless communications system 100 may further include one or more UEs, such as UE 186, that connects indirectly to one or more communication networks via one or more device-to-device (D2D) peer-to-peer (P2P) links. In the example of FIG. 1A, UE 186 has a D2D P2P link 192 with one of the UEs 104 connected to one of the base stations 102 (e.g., through which UE 186 may indirectly obtain cellular connectivity) and a D2D P2P link 194 with WLAN STA 152 connected to the WLAN AP 150 (through which UE 186 may indirectly obtain WLAN-based Internet connectivity). In an example, the D2D P2P links 192 and 194 may be supported with any well-known D2D RAT, such as LTE Direct (LTE-D), WiFi Direct (WiFi-D), Bluetooth^{®}, and so on.

The wireless communications system 100 may further include a UE 104 that may communicate with a macro cell base station 102 over a communication link 120 and/or the mmW base station 180 over a mmW communication link 184. For example, the macro cell base station 102 may support a PCell and one or more SCells for the UE 104 and the mmW base station 180 may support one or more SCells for the UE 104.

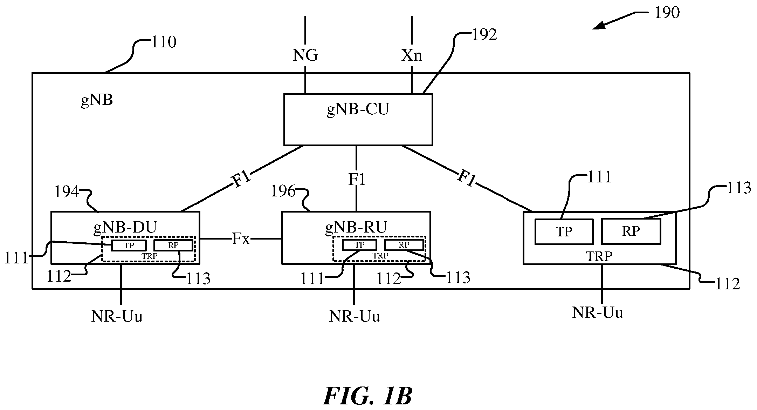

**FIG. 1B** shows an architecture diagram of an NG-RAN node 190 that may be within an NG-RAN in FIG. 1A, e.g., as a separate entity or as part of another gNB. The NG-RAN node 190 may be a gNB 102, according to one implementation. The architecture shown in FIG. 1B, for example, may be applicable to any gNB 102 in FIG. 1A.

As illustrated, gNB 102 may include a gNB Central Unit (gNB-CU) 192, a gNB Distributed Unit (gNB-DU) 194, a gNB Remote Unit (gNB-RU) 196, which may be physically co-located in the gNB 102 or may be physically separate. The gNB-CU 192 is a logical or physical node hosting support for Radio Resource Control (RRC), Service Data Adaptation Protocol (SDAP) and Packet Data Convergence Protocol (PDCP) protocols of the gNB 102 used over the NR Uu air interface and controlling the operation of one or more gNB-DUs and/or gNB-RUs. The gNB-CU 192 terminates an F1 interface connected with a gNB-DU and in some implementations, an F1 interface connected with a gNB-RU. As illustrated, the gNB-CU 192 may communicate with an AMF via an NG interface. The gNB-CU 192 may further communicate with one or more other gNBs 102 via an Xn interface. The gNB-DU 194 is a logical or physical node hosting support for Radio Link Control (RLC), Medium Access Control (MAC) and Physical (PHY) protocol layers used over the NR Uu air interface of the gNB 102, operation of which is partly controlled by gNB-CU 192. The gNB-DU terminates the F1 interface connected with the gNB-CU 192, and may terminate a lower layer split point interface Fx with a gNB-RU. The gNB-RU 196 may be based on a lower layer function split and is a logical or physical node hosting support for lower layer functions, such as PHY and Radio Frequency (RF) protocol layers used over the NR Uu air interface of the gNB 102, operation of which is partly controlled by gNB-CU 192 and/or gNB-DU 194. The gNB-RU 196 terminates the Fx interface connected with the gNB-DU 194 and in some implementations may terminate the F1 interface connected with the gNB-CU 192.

The gNB-CU 192 requests positioning measurements (e.g. E-CID) to the gNB-DU 194 and/or gNB-RU 196. The gNB-DU 194 and/or gNB-RU 196 may report the measurements back to the gNB-CU 192. A gNB-DU 194 or gNB-RU 196 may include positioning measurement functionality. It should be understood that a separate measurement node is not precluded.

Additionally, as illustrated in FIG. 1B, gNB 102 may include a Transmission Point (TP) 111 and a Reception Point (RP) 113 combined into a Transmission Reception Point (TRP) 112, which may be physically or logically located in the gNB 102. The gNB-CU 192 may be configured to communicate with the TP 111 and RP 113, e.g., via F1 interfaces. The gNB-CU 192, thus, controls one or more TPs 111 and RPs 113 which are accessible from the gNB-CU 192 via an F1 interface.

In some embodiments, the NG-RAN node 190 (or gNB 102) may comprise a subset of the elements shown in FIG. 1B. For example, the NG- RAN node 190 may comprise the gNB-CU 192 but may not include one or more of gNB-DU 194 and gNB-RU 196, RP 113 or TP 111. Alternatively, NG-RAN node 190 may include one or more of gNB-DU 194 and, RP 113 or TP 111 but may not include gNB-RU 196. Further, the elements shown in FIG. 1B may be logically separate but physically co-located or may be partially or completely physically separate. For example, one or more of gNB-DU 194 and/or gNB-RU 196, RP 113 or TP 111 may be physically separate from gNB-CU 192 or may be physically combined with gNB-CU 192. In the case of physical separation, the F1 or Fx interface may define signaling over a physical link or connection between two separated elements. In some implementations, gNB-CU 192 may be split into a control plane portion (referred to as a CU-CP or gNB-CU-CP) and a user plane portion (referred to as CU-UP or gNB-CU-UP). In this case, both the gNB-CU-CP and gNB-CU-UP may interact with gNB-DU 194 and/or gNB-RU 196 to support NR Uu air interface signaling for control plane and user plane, respectively. However, only the gNB-CU-CP may interact with TPs 111 and RPs 113 to support and control location related communication.

Protocol layering between the gNB-CU 192 and the TP 111, and RP 113 may be based on F1 C as defined in 3GPP TS 38.470, which uses an F1 Application Protocol (F1AP) at the top level as specified in 3GPP TS 38.473. New messages to support positioning could be added directly into F1AP or could be introduced in a new location specific protocol which is transported using F1AP.

The location procedures with the gNB-CU 192 may comprise all location related procedures on NG, Xn, and NR-Uu interfaces. For example, the location procedures between AMF 115 and the NG-RAN node 190 may use NGAP. The location procedures between NG-RAN node 190 and other NG-RAN nodes, e.g., gNBs 102, may use XnAP or a protocol above XnAP, such as an extended NR Positioning Protocol A (NRPPa) as defined in 3GPP TS 38.455. The location procedures between NG-RAN node 190 and UE 104 may use RRC and/or LPP.

The corresponding messages to support positioning may be carried inside a transparent F1AP message transfer container. For example, the Transfer of an NGAP Location Reporting Control and NAS Transport message may be carried in an UL/DL NGAP Message Transfer. The Transfer of location related XnAP messages may be carried in an UL/DL XnAP Message Transfer. The Transfer of location related RRC(LPP) messages may be carried in an UL/DL RRC (LPP) Message Transfer.

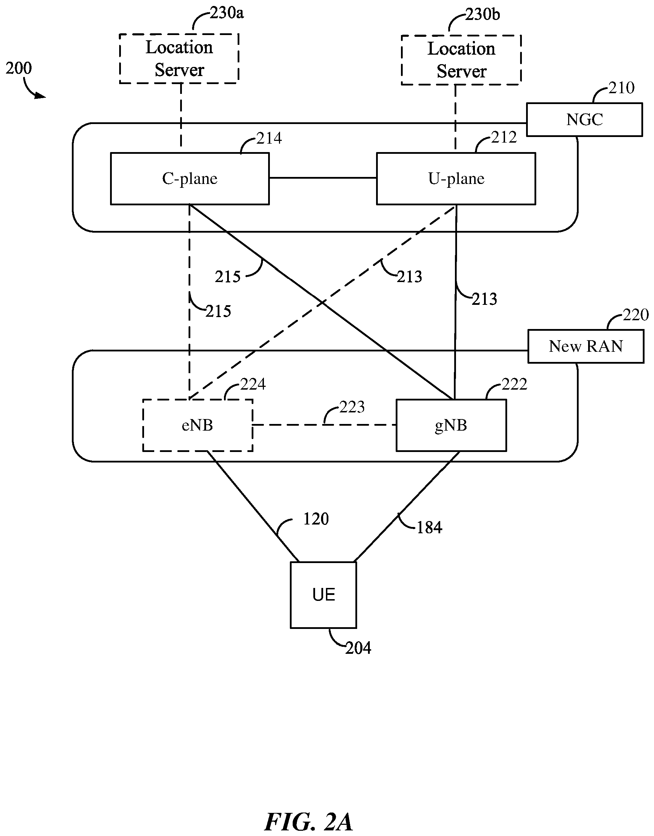

**FIG.** 2A illustrates an example wireless network structure 200. For example, an NGC 210 (also referred to as a "5GC") can be viewed functionally as control plane functions 214 (e.g., UE registration, authentication, network access, gateway selection, etc.) and user plane functions 212, (e.g., UE gateway function, access to data networks, IP routing, etc.) which operate cooperatively to form the core network. User plane interface (NG-U) 213 and control plane interface (NG-C) 215 connect the gNB 222 to the NGC 210 and specifically to the control plane functions 214 and user plane functions 212. In an additional configuration, an eNB 224 may also be connected to the NGC 210 via NG-C 215 to the control plane functions 214 and NG-U 213 to user plane functions 212. Further, eNB 224 may directly communicate with gNB 222 via a backhaul connection 223. In some configurations, the New RAN 220 may only have one or more gNBs 222, while other configurations include one or more of both eNBs 224 and gNBs 222. Either gNB 222 or eNB 224 may communicate with UEs 204 (e.g., any of the UEs depicted in FIG. 1A). Another optional aspect may include one or more location servers 230a, 230b (sometimes collectively referred to as location server 230) (which may correspond to location server 172), which may be in communication with the control plane functions 214 and user plane functions 212, respectively, in the NGC 210 to provide location assistance for UEs 204. The location server 230 can be implemented as a plurality of separate servers (e.g., physically separate servers, different software modules on a single server, different software modules spread across multiple physical servers, etc.), or alternately may each correspond to a single server. The location server 230 can be configured to support one or more location services for UEs 204 that can connect to the location server 230 via the core network, NGC 210, and/or via the Internet (not illustrated). Further, the location server 230 may be integrated into a component of the core network, or alternatively may be external to the core network, e.g., in the New RAN 220.

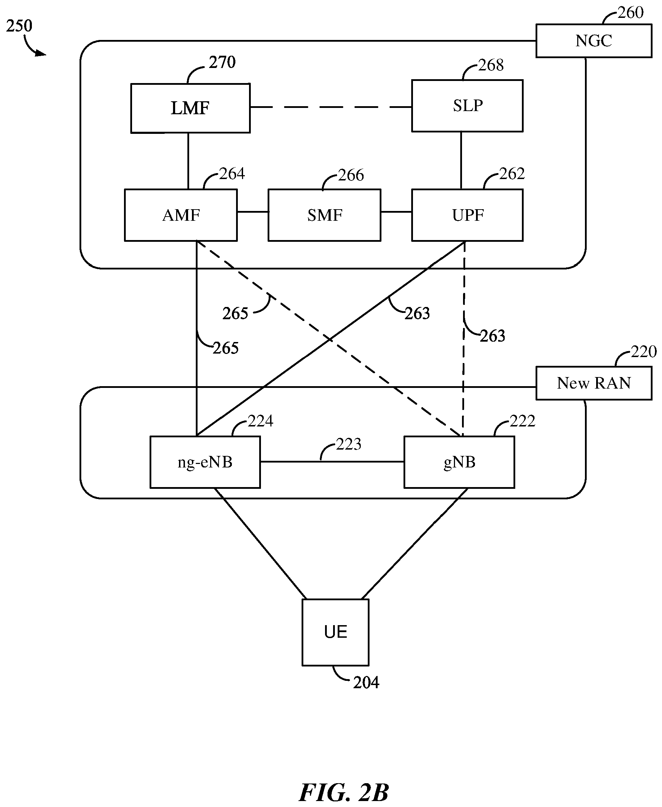

**FIG. 2B** illustrates another example wireless network structure 250. For example, an NGC 260 (also referred to as a "5GC") can be viewed functionally as control plane functions, provided by an access and mobility management function (AMF) 264, user plane function (UPF) 262, a session management function (SMF) 266, SLP 268, and an LMF 270, which operate cooperatively to form the core network (i.e., NGC 260). User plane interface 263 and control plane interface 265 connect the ng-eNB 224 to the NGC 260 and specifically to UPF 262 and AMF 264, respectively. In an additional configuration, a gNB 222 may also be connected to the NGC 260 via control plane interface 265 to AMF 264 and user plane interface 263 to UPF 262. Further, eNB 224 may directly communicate with gNB 222 via the backhaul connection 223, with or without gNB direct connectivity to the NGC 260. In some configurations, the New RAN 220 may only have one or more gNBs 222, while other configurations include one or more of both ng-eNBs 224 and gNBs 222. Either gNB 222 or eNB 224 may communicate with UEs 204 (e.g., any of the UEs depicted in FIG. 1A). The base stations of the New RAN 220 communicate with the AMF 264 over the N2 interface and the UPF 262 over the N3 interface.

The functions of the AMF include registration management, connection management, reachability management, mobility management, lawful interception, transport for session management (SM) messages between the UE 204 and the SMF 266, transparent proxy services for routing SM messages, access authentication and access authorization, transport for short message service (SMS) messages between the UE 204 and the short message service function (SMSF) (not shown), and security anchor functionality (SEAF). The AMF also interacts with the authentication server function (AUSF) (not shown) and the UE 204, and receives the intermediate key that was established as a result of the UE 204 authentication process. In the case of authentication based on a UMTS (universal mobile telecommunications system) subscriber identity module (USIM), the AMF retrieves the security material from the AUSF. The functions of the AMF also include security context management (SCM). The SCM receives a key from the SEAF that it uses to derive access-network specific keys. The functionality of the AMF also includes location services management for regulatory services, transport for location services messages between the UE 204 and the location management function (LMF) 270 (which may correspond to location server 172), as well as between the New RAN 220 and the LMF 270, evolved packet system (EPS) bearer identifier allocation for interworking with the EPS, and UE 204 mobility event notification. In addition, the AMF also supports functionalities for non-Third Generation Partnership Project (3GPP) access networks.

Functions of the UPF include acting as an anchor point for intra-/inter-RAT mobility (when applicable), acting as an external protocol data unit (PDU) session point of interconnect to the data network (not shown), providing packet routing and forwarding, packet inspection, user plane policy rule enforcement (e.g., gating, redirection, traffic steering), lawful interception (user plane collection), traffic usage reporting, quality of service (QoS) handling for the user plane (e.g., UL/DL rate enforcement, reflective QoS marking in the DL), UL traffic verification (service data flow (SDF) to QoS flow mapping), transport level packet marking in the UL and DL, DL packet buffering and DL data notification triggering, and sending and forwarding of one or more "end markers" to the source RAN node.

The functions of the SMF 266 include session management, UE Internet protocol (IP) address allocation and management, selection and control of user plane functions, configuration of traffic steering at the UPF to route traffic to the proper destination, control of part of policy enforcement and QoS, and downlink data notification. The interface over which the SMF 266 communicates with the AMF 264 is referred to as the N11 interface.

Another optional aspect may include an LMF 270, which may be in communication with the NGC 260 to provide location assistance for UEs 204. The LMF 270 can be implemented as a plurality of separate servers (e.g., physically separate servers, different software modules on a single server, different software modules spread across multiple physical servers, etc.), or alternately may each correspond to a single server. The LMF 270 can be configured to support one or more location services for UEs 204 that can connect to the LMF 270 via the core network, NGC 260, and/or via the Internet (not illustrated).

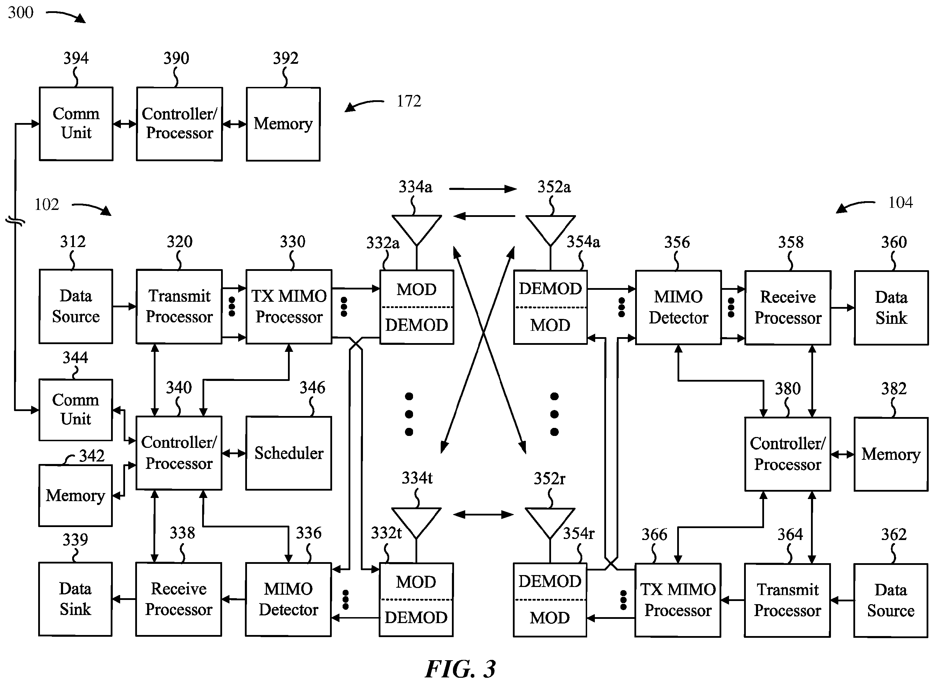

**FIG. 3** shows a block diagram of a design 300 of base station 102 and UE 104, which may be one of the base stations and one of the UEs in FIG. 1A. Base station 102 may be equipped with T antennas 334a through 334t, and UE 104 may be equipped with R antennas 352a through 352r, where in general T ≥ 1 and R ≥ 1.

At base station 102, a transmit processor 320 may receive data from a data source 312 for one or more UEs, select one or more modulation and coding schemes (MCS) for each UE based at least in part on channel quality indicators (CQIs) received from the UE, process (e.g., encode and modulate) the data for each UE based at least in part on the MCS(s) selected for the UE, and provide data symbols for all UEs. Transmit processor 320 may also process system information (e.g., for semi-static resource partitioning information (SRPI) and/or the like) and control information (e.g., CQI requests, grants, upper layer signaling, and/or the like) and provide overhead symbols and control symbols. Transmit processor 320 may also generate reference symbols for reference signals (e.g., the cell-specific reference signal (CRS)) and synchronization signals (e.g., the primary synchronization signal (PSS) and secondary synchronization signal (SSS)). A transmit (TX) multiple-input multiple-output (MIMO) processor 330 may perform spatial processing (e.g., precoding) on the data symbols, the control symbols, the overhead symbols, and/or the reference symbols, if applicable, and may provide T output symbol streams to T modulators (MODs) 332a through 332t. Each modulator 332 may process a respective output symbol stream (e.g., for OFDM and/or the like) to obtain an output sample stream. Each modulator 332 may further process (e.g., convert to analog, amplify, filter, and upconvert) the output sample stream to obtain a downlink signal. T downlink signals from modulators 332a through 332t may be transmitted via T antennas 334a through 334t, respectively. According to various aspects described in more detail below, the synchronization signals can be generated with location encoding to convey additional information.

At UE 104, antennas 352a through 352r may receive the downlink signals from base station 102 and/or other base stations and may provide received signals to demodulators (DEMODs) 354a through 354r, respectively. Each demodulator 354 may condition (e.g., filter, amplify, down convert, and digitize) a received signal to obtain input samples. Each demodulator 354 may further process the input samples (e.g., for OFDM and/or the like) to obtain received symbols. A MIMO detector 356 may obtain received symbols from all R demodulators 354a through 354r, perform MIMO detection on the received symbols if applicable, and provide detected symbols. A receive processor 358 may process (e.g., demodulate and decode) the detected symbols, provide decoded data for UE 104 to a data sink 360, and provide decoded control information and system information to a controller/processor 380. A channel processor may determine reference signal received power (RSRP), received signal strength indicator (RSSI), reference signal received quality (RSRQ), channel quality indicator (CQI), and/or the like. In some aspects, one or more components of UE 104 may be included in a housing.

On the uplink, at UE 104, a transmit processor 364 may receive and process data from a data source 362 and control information (e.g., for reports comprising RSRP, RSSI, RSRQ, CQI, and/or the like) from controller/processor 380. Transmit processor 364 may also generate reference symbols for one or more reference signals. The symbols from transmit processor 364 may be precoded by a TX MIMO processor 366 if applicable, further processed by modulators 354a through 354r (e.g., for DFT-s-OFDM, CP-OFDM, and/or the like), and transmitted to base station 102. At base station 102, the uplink signals from UE 104 and other UEs may be received by antennas 334, processed by demodulators 332, detected by a MIMO detector 336 if applicable, and further processed by a receive processor 338 to obtain decoded data and control information sent by UE 104. Receive processor 338 may provide the decoded data to a data sink 339 and the decoded control information to controller/processor 340. Base station 102 may include communication unit 344 and communicate to location server 172 via communication unit 344. Location server 172 may include communication unit 394, controller/processor 390, and memory 392.

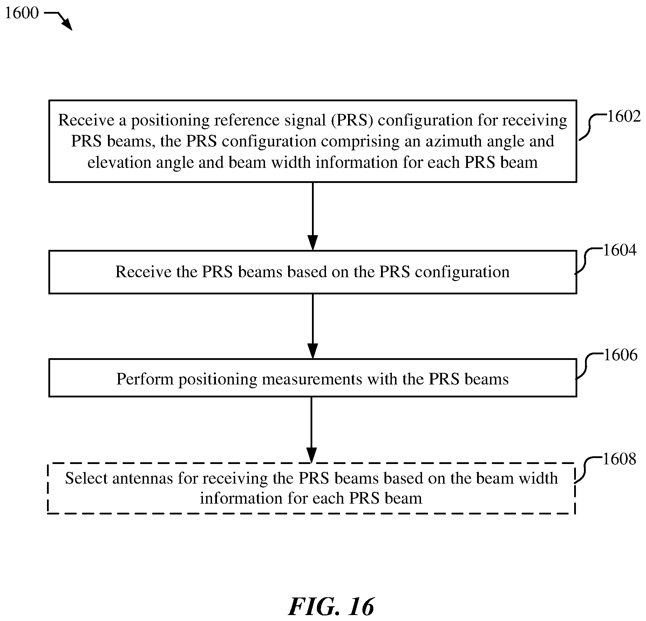

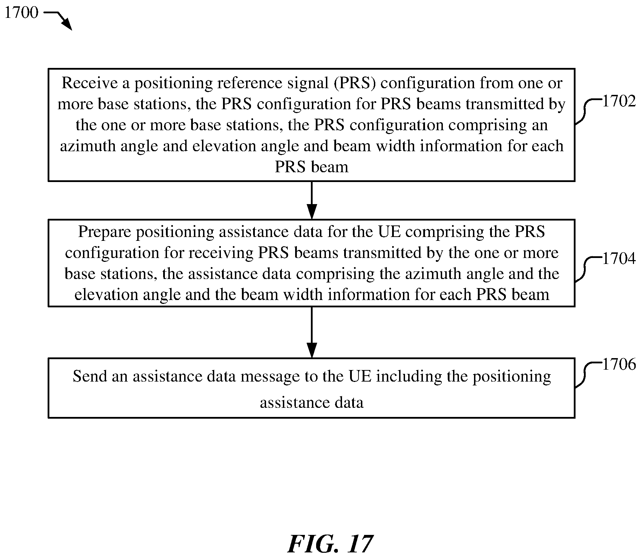

Controller/processor 340 of base station 102, controller/processor 380 of UE 104, controller/processor 390 of location server 172, and/or any other component(s) of FIG. 3 may perform one or more techniques associated broadcasting positioning assistance data in a differential manner, as described in more detail elsewhere herein. For example, controller/processor 380 of UE 104, controller/processor 340 of base station 102, controller 390 of location server 172, and/or any other component(s) of FIG. 3 may perform or direct operations of, for example, process 1600 and 1700 of FIGs. 16 and 17, and/or other processes as described herein. Memories 342, 382, and 392 may store data and program codes for base station 102, UE 104, and location server 172, respectively. In some aspects, memory 342 and/or memory 382 and/or memory392 may comprise a non-transitory computer-readable medium storing one or more instructions for wireless communication. For example, the one or more instructions, when executed by one or more processors of the UE 104, base station 102 and/or location server 172 may perform or direct operations of, for example, process 1600 and 1700 of FIGs. 16 and 17 and/or other processes as described herein. A scheduler 346 may schedule UEs for data transmission on the downlink and/or uplink.

As indicated above, FIG. 3 is provided as an example. Other examples may differ from what is described with regard to FIG. 3.

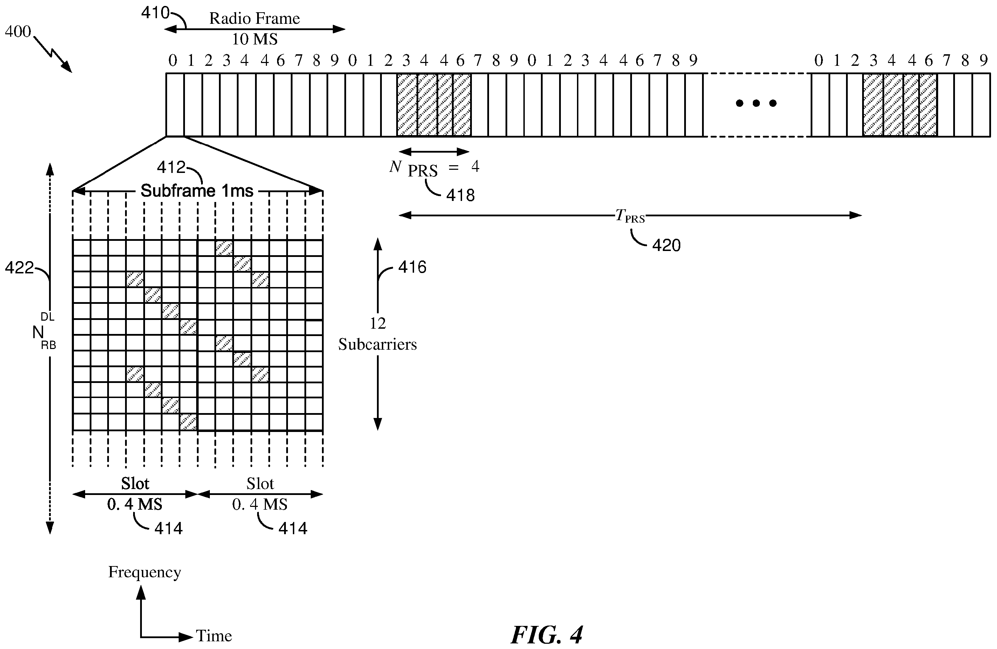

**FIG. 4** shows a structure of an exemplary subframe sequence 400 with positioning reference signal (PRS) positioning occasions, according to aspects of the disclosure. Subframe sequence 400 may be applicable to the broadcast of PRS signals from a base station (e.g., any of the base stations described herein) or other network node. The subframe sequence 400 may be used in LTE systems, and the same or similar subframe sequence may be used in other communication technologies / protocols, such as 5G and NR. In FIG. 4, time is represented horizontally (e.g., on the X axis) with time increasing from left to right, while frequency is represented vertically (e.g., on the Y axis) with frequency increasing (or decreasing) from bottom to top. As shown in FIG. 4, downlink and uplink radio frames 410 may be of 10 millisecond (ms) duration each. For downlink frequency division duplex (FDD) mode, radio frames 410 are organized, in the illustrated example, into ten subframes 412 of 1 ms duration each. Each subframe 412 comprises two slots 414, each of, for example, 0.5 ms duration.

In the frequency domain, the available bandwidth may be divided into uniformly spaced orthogonal subcarriers 416 (also referred to as "tones" or "bins"). For example, for a normal length cyclic prefix (CP) using, for example, 15 kHz spacing, subcarriers 416 may be grouped into a group of twelve (12) subcarriers. A resource of one OFDM symbol length in the time domain and one subcarrier in the frequency domain (represented as a block of subframe 412) is referred to as a resource element (RE). Each grouping of the 12 subcarriers 416 and the 14 OFDM symbols is termed a resource block (RB) and, in the example above, the number of subcarriers in the resource block may be written as ${N}_{SC}^{RB} = 12$. For a given channel bandwidth, the number of available resource blocks on each channel 422, which is also called the transmission bandwidth configuration 422, is indicated as ${N}_{RB}^{DL}$. For example, for a 3 MHz channel bandwidth in the above example, the number of available resource blocks on each channel 422 is given by ${N}_{RB}^{DL} = 15$. Note that the frequency component of a resource block (e.g., the 12 subcarriers) is referred to as a physical resource block (PRB).

A base station may transmit radio frames (e.g., radio frames 410), or other physical layer signaling sequences, supporting PRS signals (i.e. a downlink (DL) PRS) according to frame configurations either similar to, or the same as that, shown in FIG. 4, which may be measured and used for a UE (e.g., any of the UEs described herein) position estimation. Other types of wireless nodes (e.g., a distributed antenna system (DAS), remote radio head (RRH), UE, AP, etc.) in a wireless communications network may also be configured to transmit PRS signals configured in a manner similar to (or the same as) that depicted in FIG. 4.

A collection of resource elements that are used for transmission of PRS signals is referred to as a "PRS resource." The collection of resource elements can span multiple PRBs in the frequency domain and N (e.g., 1 or more) consecutive symbol(s) within a slot 414 in the time domain. For example, the cross-hatched resource elements in the slots 414 may be examples of two PRS resources. A "PRS resource set" is a set of PRS resources used for the transmission of PRS signals, where each PRS resource has a PRS resource identifier (ID). In addition, the PRS resources in a PRS resource set are associated with the same transmission-reception point (TRP). A PRS resource ID in a PRS resource set is associated with a single beam transmitted from a single TRP (where a TRP may transmit one or more beams). Note that this does not have any implications on whether the TRPs and beams from which signals are transmitted are known to the UE.

PRS may be transmitted in special positioning subframes that are grouped into positioning occasions. A PRS occasion is one instance of a periodically repeated time window (e.g., consecutive slot(s)) where PRS are expected to be transmitted. Each periodically repeated time window can include a group of one or more consecutive PRS occasions. Each PRS occasion can comprise a number *N_{PRS}* of consecutive positioning subframes. The PRS positioning occasions for a cell supported by a base station may occur periodically at intervals, denoted by a number *T_{PRS}* of milliseconds or subframes. As an example, FIG. 4 illustrates a periodicity of positioning occasions where *N_{PRS}* equals 4 418 and *T_{PRS}* is greater than or equal to 20 420. In some aspects, *T_{PRS}* may be measured in terms of the number of subframes between the start of consecutive positioning occasions. Multiple PRS occasions may be associated with the same PRS resource configuration, in which case, each such occasion is referred to as an "occasion of the PRS resource" or the like.

A PRS may be transmitted with a constant power. A PRS can also be transmitted with zero power (i.e., muted). Muting, which turns off a regularly scheduled PRS transmission, may be useful when PRS signals between different cells overlap by occurring at the same or almost the same time. In this case, the PRS signals from some cells may be muted while PRS signals from other cells are transmitted (e.g., at a constant power). Muting may aid signal acquisition and time of arrival (TOA) and reference signal time difference (RSTD) measurement, by UEs, of PRS signals that are not muted (by avoiding interference from PRS signals that have been muted). Muting may be viewed as the non-transmission of a PRS for a given positioning occasion for a particular cell. Muting patterns (also referred to as muting sequences) may be signaled (e.g., using the LTE positioning protocol (LPP)) to a UE using bit strings. For example, in a bit string signaled to indicate a muting pattern, if a bit at position *j* is set to '0', then the UE may infer that the PRS is muted for a *j*^{th} positioning occasion.

To further improve hearability of PRS, positioning subframes may be low-interference subframes that are transmitted without user data channels. As a result, in ideally synchronized networks, PRS may be interfered with by other cells' PRS with the same PRS pattern index (i.e., with the same frequency shift), but not from data transmissions. The frequency shift may be defined as a function of a PRS ID for a cell or other transmission point (TP) (denoted as ${N}_{ID}^{PRS}$) or as a function of a physical cell identifier (PCI) (denoted as ${N}_{ID}^{cell}$) if no PRS ID is assigned, which results in an effective frequency re-use factor of six (6).

To also improve hearability of a PRS (e.g., when PRS bandwidth is limited, such as with only six resource blocks corresponding to 1.4 MHz bandwidth), the frequency band for consecutive PRS positioning occasions (or consecutive PRS subframes) may be changed in a known and predictable manner via frequency hopping. In addition, a cell supported by a base station may support more than one PRS configuration, where each PRS configuration may comprise a distinct frequency offset (*vshift*), a distinct carrier frequency, a distinct bandwidth, a distinct code sequence, and/or a distinct sequence of PRS positioning occasions with a particular number of subframes (*N_{PRS}*) per positioning occasion and a particular periodicity (*T_{PRS}*). In some implementation, one or more of the PRS configurations supported in a cell may be for a directional PRS and may then have additional distinct characteristics, such as a distinct direction of transmission, a distinct range of horizontal angles, and/or a distinct range of vertical angles.

A PRS configuration, as described above, including the PRS transmission/muting schedule, is signaled to the UE to enable the UE to perform PRS positioning measurements. The UE is not expected to blindly perform detection of PRS configurations.

Note that the terms "positioning reference signal" and "PRS" may sometimes refer to specific reference signals that are used for positioning in LTE/NR systems. However, as used herein, unless otherwise indicated, the terms "positioning reference signal" and "PRS" refer to any type of reference signal that is intended for positioning. Downlink (DL) or sidelink (SL) signals for which the primary purpose is unrelated to positioning, such as control or communication, are referred to herein as non-positioning reference signals (non-PRS). Examples of non-PRS include, but are not limited to, PHY channels, such as SSB, TRS, CSI-RS, PDSCH, DM-RS, PDCCH, PSSCH, and PSCCH. As discussed herein, the non-PRS signals, which are typically transmitted for purposes unrelated to positioning, may also be used by the UE for positioning purposes, e.g., in a hybrid positioning measurement. Similar to DL PRS transmitted by base stations, discussed above, a UE may transmit UL PRS for positioning, as well as UL or SL non-PRS that may be used for positioning. The UL PRS may be, e.g., sounding reference signals (SRS) for positioning.

Using received DL PRS or non-PRS from base stations or SL signaling from other UEs, and/or UL PRS or non-PRS transmitted to base stations or SL to other UEs, the UE may perform various positioning measurements, such as reference signal time difference (RSTD) measurements for time difference of arrival (TDOA) a positioning technique, reference signal received power (RSRP) measurements for TDOA, Angle of Departure, and Round Trip Time (RTT) or multi cell RTT (multi-RTT) positioning techniques, time difference between reception and transmission of signals (Rx-Tx) for a multi-RTT positioning technique, etc.

Various positioning technologies rely on DL, UL or SL PRS, which may also use the DL, UL, or SL non-PRS . For example, positioning technologies that use reference signal include downlink based positioning, uplink based positioning, and combined downlink and uplink based positioning. For example, downlink based positioning includes positioning methods such as DL-TDOA and DL-AOD. Uplink based positioning includes positioning method such as UL-TDOA and UL-AOA. Downlink and uplink based positioning includes positioning method, such as RTT with one or more neighboring base station (multi-RTT). Other positioning methods exist, including methods that do not rely on PRS. For example, Enhanced Cell-ID (E-CID) is based on radio resource management (RRM) measurements.

Currently, positioning assistance data for PRS beams includes the azimuth and elevation angles of each DL-PRS Resource (beam), but does not provide any beam width information. The knowledge of PRS beam width (also some other beam pattern information, such as side lobe or back lobe information) may be used to assist in receiving the DL PRS beams, and may be used to enable the adaptation of UE Rx antenna for the purpose of UE power saving. For example, if a PRS beam is wide angle beam, a UE receiver with a single antenna will be highly likely to achieve high quality positioning measurement. Accordingly, the UE may configure its receiver with a single Rx antenna (or reduced number of Rx antennas) to save power consumption.

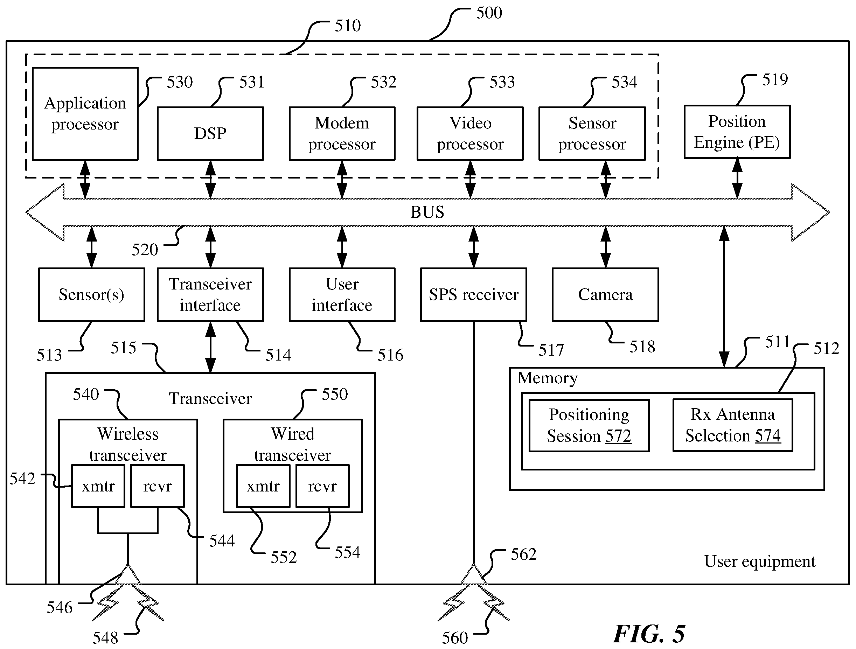

**FIG. 5** illustrates a UE 500, which is an example of the UE 104, capable of receiving assistance data including PRS beam width information and capable of adaptation of Rx antennas based on the beam width information. The UE 500 includes a computing platform including at least one processor 510, memory 511 including software (SW) 512, one or more sensors 513, a transceiver interface 514 for a transceiver 515, a user interface 516, a Satellite Positioning System (SPS) receiver 517, a camera 518, and a position engine (PE) 519. The at least one processor 510, the memory 511, the sensor(s) 513, the transceiver interface 514, the user interface 516, the SPS receiver 517, the camera 518, and the position engine 519 may be communicatively coupled to each other by a bus 520 (which may be configured, e.g., for optical and/or electrical communication). One or more of the shown apparatus (e.g., the camera 518, the SPS receiver 517, and/or one or more of the sensor(s) 513, etc.) may be omitted from the UE 500. The at least one processor 510 may include one or more intelligent hardware devices, e.g., a central processing unit (CPU), a microcontroller, an application specific integrated circuit (ASIC), etc. The at least one processor 510 may comprise multiple processors including an application processor 530, a Digital Signal Processor (DSP) 531, a modem processor 532, a video processor 533, and/or a sensor processor 534. The at least one processor 510 may further include the position engine 519, or the position engine 519 may be considered separate from the at least one processor 510. One or more of the processors 530-534 may comprise multiple devices (e.g., multiple processors). For example, the sensor processor 534 may comprise, e.g., processors for radar, ultrasound, and/or lidar, etc. The modem processor 532 may support dual SIM/dual connectivity (or even more SIMs). For example, a SIM (Subscriber Identity Module or Subscriber Identification Module) may be used by an Original Equipment Manufacturer (OEM), and another SIM may be used by an end user of the UE 500 for connectivity. The memory 511 is a non-transitory storage medium that may include random access memory (RAM), flash memory, disc memory, and/or read-only memory (ROM), etc. The memory 511 stores the software 512 which may be processor-readable, processor-executable software code containing instructions that are configured to, when executed, cause the at least one processor 510 to operate as a special purpose computer programmed to perform the various functions described herein. Alternatively, the software 512 may not be directly executable by the at least one processor 510 but may be configured to cause the at least one processor 510, e.g., when compiled and executed, to operate as a special purpose computer to perform the various functions described herein. The description may refer only to the at least one processor 510 performing a function, but this includes other implementations such as where the at least one processor 510 executes software and/or firmware. The description may refer to the at least one processor 510 performing a function as shorthand for one or more of the processors 530-234 performing the function. The description may refer to the UE 500 performing a function as shorthand for one or more appropriate components of the UE 500 performing the function. The at least one processor 510 may include a memory with stored instructions in addition to and/or instead of the memory 511. Functionality of the at least one processor 510 is discussed more fully below.

The configuration of the UE 500 shown in FIG. 5 is an example and not limiting of the invention, including the claims, and other configurations may be used. For example, an example configuration of the UE includes one or more of the processors 530-534 of the at least one processor 510, the memory 511, and the wireless transceiver 540. Other example configurations include one or more of the processors 530-534 of the at least one processor 510, the memory 511, the wireless transceiver 540, and one or more of the sensor(s) 513, the user interface 516, the SPS receiver 517, the camera 518, the PE 519, and/or the wired transceiver 550.

The UE 500 may comprise the modem processor 532 that may be capable of performing baseband processing of signals received and down-converted by the transceiver 515 and/or the SPS receiver 517. The modem processor 532 may perform baseband processing of signals to be upconverted for transmission by the transceiver 515. Also or alternatively, baseband processing may be performed by the processor 530 and/or the DSP 531. Other configurations, however, may be used to perform baseband processing.

The UE 500 may include the sensor(s) 513 that may include, for example, one or more of various types of sensors such as one or more inertial sensors, one or more barometric pressure sensors, one or more magnetometers, one or more environment sensors, one or more optical sensors, one or more weight sensors, and/or one or more radio frequency (RF) sensors, etc. An inertial measurement unit (IMU) may comprise, for example, one or more accelerometers (e.g., collectively responding to acceleration of the UE 500 in three dimensions) and/or one or more gyroscopes capable of detecting motion including rotation of the UE 500. The sensor(s) 513 may include one or more magnetometers to determine orientation (e.g., relative to magnetic north and/or true north) that may be used for any of a variety of purposes, e.g., to support one or more compass applications. The environment sensor(s) may comprise, for example, one or more temperature sensors, one or more barometric pressure sensors, one or more ambient light sensors, one or more camera imagers, and/or one or more microphones, etc. The sensor(s) 513 may generate analog and/or digital signals indications of which may be stored in the memory 511 and processed by the DSP 531 and/or the processor 530 in support of one or more applications such as, for example, applications directed to positioning and/or navigation operations.

The sensor(s) 513 may be used in relative location measurements, relative location determination, motion determination, etc. Information detected by the sensor(s) 513 may be used for motion detection, relative displacement, dead reckoning, sensor-based location determination, and/or sensor-assisted location determination. The sensor(s) 513 may be useful to determine whether the UE 500 is fixed (stationary) or mobile including rotating and/or whether to report certain useful information to the location server 172 regarding the mobility of the UE 500. For example, based on the information obtained/measured by the sensor(s), the UE 500 may notify/report to the location server 172 that the UE 500 has detected movements or that the UE 500 has moved, and report the relative displacement/distance (e.g., via dead reckoning, or sensor-based location determination, or sensor-assisted location determination enabled by the sensor(s) 513). In another example, for relative positioning information, the sensors/IMU can be used to determine the angle and/or orientation of the other device with respect to the UE 500, etc.

The IMU may be configured to provide measurements about a direction of motion and/or a speed of motion of the UE 500, which may be used in relative location determination. For example, one or more accelerometers and/or one or more gyroscopes of the IMU may detect, respectively, a linear acceleration and a speed of rotation of the UE 500. The linear acceleration and speed of rotation measurements of the UE 500 may be integrated over time to determine an instantaneous direction of motion as well as a displacement of the UE 500. The instantaneous direction of motion and the displacement may be integrated to track a location of the UE 500. For example, a reference location of the UE 500 may be determined, e.g., using the SPS receiver 517 (and/or by some other means) for a moment in time and measurements from the accelerometer(s) and gyroscope(s) taken after this moment in time may be used in dead reckoning to determine present location of the UE 500 based on movement (direction and distance) of the UE 500 relative to the reference location.

The magnetometer(s) may determine magnetic field strengths in different directions which may be used to determine orientation of the UE 500. For example, the orientation may be used to provide a digital compass for the UE 500. The magnetometer may be a two-dimensional magnetometer configured to detect and provide indications of magnetic field strength in two orthogonal dimensions. Alternatively, the magnetometer may be a three-dimensional magnetometer configured to detect and provide indications of magnetic field strength in three orthogonal dimensions. The magnetometer may provide means for sensing a magnetic field and providing indications of the magnetic field, e.g., to the at least one processor 510.

The barometric pressure sensors(s) may determine air pressure, which may be used to determine the elevation or current floor level in a building of the UE 500. For example, a differential pressure reading may be used to detect when the UE 500 has changed floor levels as well as the number of floors that have changed. The barometric pressure sensors(s) may provide means for sensing air pressure and providing indications of the air pressure, e.g., to the at least one processor 510.

The transceiver 515 may include a wireless transceiver 540 and a wired transceiver 550 configured to communicate with other devices through wireless connections and wired connections, respectively. For example, the wireless transceiver 540 may include a transmitter 542 and receiver 544 coupled to one or more antennas 546 for transmitting (e.g., on one or more uplink channels and/or one or more sidelink channels) and/or receiving (e.g., on one or more downlink channels and/or one or more sidelink channels) wireless signals 548 and transducing signals from the wireless signals 548 to wired (e.g., electrical and/or optical) signals and from wired (e.g., electrical and/or optical) signals to the wireless signals 548. Thus, the transmitter 542 may include multiple transmitters that may be discrete components or combined/integrated components, and/or the receiver 544 may include multiple receivers that may be discrete components or combined/integrated components. The wireless transceiver 540 may be configured to communicate signals (e.g., with TRPs and/or one or more other devices) according to a variety of radio access technologies (RATs) such as 5G New Radio (NR), GSM (Global System for Mobiles), UMTS (Universal Mobile Telecommunications System), AMPS (Advanced Mobile Phone System), CDMA (Code Division Multiple Access), WCDMA (Wideband CDMA), LTE (Long-Term Evolution), LTE Direct (LTE-D), 6GPP LTE-V2X (PC5), IEEE 802.11 (including IEEE 802.11p), WiFi, WiFi Direct (WiFi-D), Bluetooth^{®}, Zigbee etc. New Radio may use mm-wave frequencies and/or sub-6GHz frequencies. The wired transceiver 550 may include a transmitter 552 and a receiver 554 configured for wired communication, e.g., with the network 135. The transmitter 552 may include multiple transmitters that may be discrete components or combined/integrated components, and/or the receiver 554 may include multiple receivers that may be discrete components or combined/integrated components. The wired transceiver 550 may be configured, e.g., for optical communication and/or electrical communication. The transceiver 515 may be communicatively coupled to the transceiver interface 514, e.g., by optical and/or electrical connection. The transceiver interface 514 may be at least partially integrated with the transceiver 515.

The antennas 546 may include an antenna array, which may be capable of receive beamforming, e.g., by increasing the gain setting and/or adjust the phase setting of an array of antennas in a particular direction to amplify (e.g., to increase the gain level of) the RF signals received from that direction. The antennas 546 may further include a plurality of antenna panels, wherein each antenna panel is capable of beamforming. The antennas 546 is capable of adaptation, e.g., selection of one or more antennas for controlling receiving transmitted beams from a base station. A reduced number of beams or a single beam, for example, may be selected for reception of a wide angle beam, e.g., to reduce power consumption, while an increased number of antennas in an antenna array may be selected when the transmit beam is relatively narrow.

The user interface 516 may comprise one or more of several devices such as, for example, a speaker, microphone, display device, vibration device, keyboard, touch screen, etc. The user interface 516 may include more than one of any of these devices. The user interface 516 may be configured to enable a user to interact with one or more applications hosted by the UE 500. For example, the user interface 516 may store indications of analog and/or digital signals in the memory 511 to be processed by DSP 531 and/or the processor 530 in response to action from a user. Similarly, applications hosted on the UE 500 may store indications of analog and/or digital signals in the memory 511 to present an output signal to a user. The user interface 516 may include an audio input/output (I/O) device comprising, for example, a speaker, a microphone, digital-to-analog circuitry, analog-to-digital circuitry, an amplifier and/or gain control circuitry (including more than one of any of these devices). Other configurations of an audio I/O device may be used. Also or alternatively, the user interface 516 may comprise one or more touch sensors responsive to touching and/or pressure, e.g., on a keyboard and/or touch screen of the user interface 516.

The SPS receiver 517 (e.g., a Global Positioning System (GPS) receiver) may be capable of receiving and acquiring SPS signals 560 via an SPS antenna 562. The antenna 562 is configured to transduce the wireless signals 560 to wired signals, e.g., electrical or optical signals, and may be integrated with the antenna 546. The SPS receiver 517 may be configured to process, in whole or in part, the acquired SPS signals 560 for estimating a location of the UE 500. For example, the SPS receiver 517 may be configured to determine location of the UE 500 by trilateration using the SPS signals 560. The processor 530, the memory 511, the DSP 531, the PE 519 and/or one or more additional specialized processors (not shown) may be utilized to process acquired SPS signals, in whole or in part, and/or to calculate an estimated location of the UE 500, in conjunction with the SPS receiver 517. The memory 511 may store indications (e.g., measurements) of the SPS signals 560 and/or other signals (e.g., signals acquired from the wireless transceiver 540) for use in performing positioning operations. The general-purpose processor 530, the DSP 531, the PE 519, and/or one or more additional specialized processors, and/or the memory 511 may provide or support a location engine for use in processing measurements to estimate a location of the UE 500.

The UE 500 may include the camera 518 for capturing still or moving imagery. The camera 518 may comprise, for example, an imaging sensor (e.g., a charge coupled device or a CMOS imager), a lens, analog-to-digital circuitry, frame buffers, etc. Additional processing, conditioning, encoding, and/or compression of signals representing captured images may be performed by the general-purpose processor 530 and/or the DSP 531. Also or alternatively, the video processor 533 may perform conditioning, encoding, compression, and/or manipulation of signals representing captured images. The video processor 533 may decode/decompress stored image data for presentation on a display device (not shown), e.g., of the user interface 516.

The position engine (PE) 519 may be configured to determine a position of the UE 500, motion of the UE 500, and/or relative position of the UE 500, and/or time. For example, the PE 519 may communicate with, and/or include some or all of, the SPS receiver 517 and the wireless transceiver 540. The PE 519 may work in conjunction with the at least one processor 510 and the memory 511 as appropriate to perform at least a portion of one or more positioning methods, although the description herein may refer only to the PE 519 being configured to perform, or performing, in accordance with the positioning method(s). The PE 519 may also or alternatively be configured to determine location of the UE 500 using terrestrial-based signals (e.g., at least some of the signals 548) for trilateration, for assistance with obtaining and using the SPS signals 560, or both. The PE 519 may be configured to use one or more other techniques (e.g., relying on the UE's self-reported location (e.g., part of the UE's position beacon)) for determining the location of the UE 500, and may use a combination of techniques (e.g., SPS and terrestrial positioning signals) to determine the location of the UE 500. The PE 519 may include one or more of the sensors 513 (e.g., gyroscope(s), accelerometer(s), magnetometer(s), etc.) that may sense orientation and/or motion of the UE 500 and provide indications thereof that the at least one processor 510 (e.g., the processor 530 and/or the DSP 531) may be configured to use to determine motion (e.g., a velocity vector and/or an acceleration vector) of the UE 500. The PE 519 may be configured to provide indications of uncertainty and/or error in the determined position and/or motion.

The memory 511 may store software 512 that contains executable program code or software instructions that when executed by the at least one processor 510 may cause the at least one processor 510 to operate as a special purpose computer programmed to perform the functions disclosed herein. As illustrated, the memory 511 may include one or more components or modules that may be implemented by the at least one processor 510 to perform the disclosed functions. While the components or modules are illustrated as software 512 in memory 511 that is executable by the at least one processor 510, it should be understood that the components or modules may be stored in another computer readable medium or may be dedicated hardware either in the at least one processor 510 or off the processor. A number of software modules and data tables may reside in the memory 511 and be utilized by the at least one processor 510 in order to manage both communications and the functionality described herein. It should be appreciated that the organization of the contents of the memory 511 as shown is merely exemplary, and as such the functionality of the modules and/or data structures may be combined, separated, and/or be structured in different ways depending upon the implementation.

The memory 511, for example, may include a positioning session module 572 that when implemented by the one or more processors 510 configures the one or more processors 510 to engage in a positioning session for the UE. For example, the one or more processors 510 may be configured to engage in a positioning session by providing positioning capabilities to a location server, via the transceiver 515. The one or more processors 510 may be configured to receive positioning assistance data from a location server and/or serving base station, via the transceiver 515, such as wireless transceiver 540. The one or more processors 510 may be configured to receive PRS beams and to perform positioning measurements, e.g., using the transceiver 515. The one or more processors 510 may further be configured to estimate a position estimate using the positioning measurements and base station location information received in assistance data in UE based positioning or to provide a measurement information report, via the transceiver 515, to a network node, such as location server, for UE assisted positioning.

The memory 511, for example, may include a Rx antenna selection module 574 that when implemented by the one or more processors 510 configures the one or more processors 510 to compare beam width information received in assistance data to one or more thresholds. For example, one or more of the beam width, boresight direction uncertainty, beam width uncertainty, side lobe and/or back lobe power level or angle, may be compared to corresponding thresholds. If the beam width information of a PRS beam is greater than the one or more processors 510 may be configured to select a reduced number of Rx antennas for receiving the PRS beam. Where multiple antenna panels are used by the UE, e.g., for PRS beams transmitted in the millimeter wave frequency band, the one or more processors 510 may be configured to select a reduced number of antenna panels at least partially based on the beam width information, such as when one or more of a boresight direction uncertainty and a beam width uncertainty is less than a threshold. Other factors, such as UE motion or rotation, as determined from sensors 513, may be used to determine whether to select a reduced number of antenna panels.

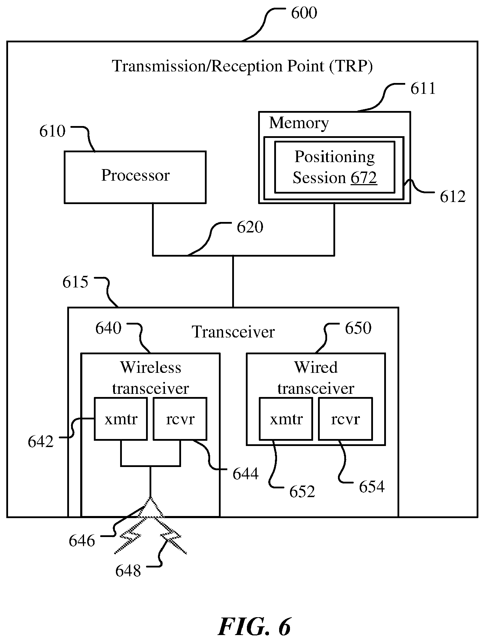

**FIG. 6** shows an example of a TRP 600, which is an example of one of the BSs 102, 180, capable of providing PRS beam width information which may be included in positioning assistance data to the UE. The TRP 600 includes a computing platform including at least one processor 610, memory 611 including software (SW) 612, and a transceiver 615. The at least one processor 610, the memory 611, and the transceiver 615 may be communicatively coupled to each other by a bus 620 (which may be configured, e.g., for optical and/or electrical communication). One or more of the shown apparatus (e.g., a wireless interface) may be omitted from the TRP 600. The at least one processor 610 may include one or more intelligent hardware devices, e.g., a central processing unit (CPU), a microcontroller, an application specific integrated circuit (ASIC), etc. The at least one processor 610 may comprise multiple processors (e.g., including one or more of an application processor, a DSP, a modem processor, a video processor, and/or a sensor processor, similar to that shown in FIG. 5). The memory 611 is a non-transitory storage medium that may include random access memory (RAM)), flash memory, disc memory, and/or read-only memory (ROM), etc. The memory 611 stores the software 612 which may be processor-readable, processor-executable software code containing instructions that are configured to, when executed, cause the at least one processor 610 to operate as a special purpose computer programmed to perform the various functions described herein. Alternatively, the software 612 may not be directly executable by the at least one processor 610 but may be configured to cause the at least one processor 610, e.g., when compiled and executed, to operate as a special purpose computer to perform the various functions described herein. The description may refer only to the at least one processor 610 performing a function, but this includes other implementations such as where the at least one processor 610 executes software and/or firmware. The description may refer to the at least one processor 610 performing a function as shorthand for one or more of the processors contained in the at least one processor 610 performing the function. The description may refer to the TRP 600 performing a function as shorthand for one or more appropriate components of the TRP 600 (and thus of one of the BSs 102, 180) performing the function. The at least one processor 610 may include a memory with stored instructions in addition to and/or instead of the memory 611. Functionality of the at least one processor 610 is discussed more fully below.

The transceiver 615 may include a wireless transceiver 640 and a wired transceiver 650 configured to communicate with other devices through wireless connections and wired connections, respectively. For example, the wireless transceiver 640 may include a transmitter 642 and receiver 644 coupled to one or more antennas 646 for transmitting (e.g., on one or more uplink channels and/or one or more downlink channels) and/or receiving (e.g., on one or more downlink channels and/or one or more uplink channels) wireless signals 648 and transducing signals from the wireless signals 648 to wired (e.g., electrical and/or optical) signals and from wired (e.g., electrical and/or optical) signals to the wireless signals 648. The antenna 646 is one or more antenna array capable of beam forming and transmitting beams, including PRS beams in a specific direction with a beam width. The transmitter 642 may include multiple transmitters that may be discrete components or combined/integrated components, and/or the receiver 644 may include multiple receivers that may be discrete components or combined/integrated components. The wireless transceiver 640 may be configured to communicate signals (e.g., with the UE 500, one or more other UEs, and/or one or more other devices) according to a variety of radio access technologies (RATs) such as 5G New Radio (NR), GSM (Global System for Mobiles), UMTS (Universal Mobile Telecommunications System), AMPS (Advanced Mobile Phone System), CDMA (Code Division Multiple Access), WCDMA (Wideband CDMA), LTE (Long-Term Evolution), LTE Direct (LTE-D), 6GPP LTE-V2X (PC5), IEEE 802.11 (including IEEE 802.11p), WiFi, WiFi Direct (WiFi-D), Bluetooth^{®}, Zigbee etc. The wired transceiver 650 may include a transmitter 652 and a receiver 654 configured for wired communication, e.g., with the network 135 to send communications to, and receive communications from, the location server 172, for example. The transmitter 652 may include multiple transmitters that may be discrete components or combined/integrated components, and/or the receiver 654 may include multiple receivers that may be discrete components or combined/integrated components. The wired transceiver 650 may be configured, e.g., for optical communication and/or electrical communication.

The configuration of the TRP 600 shown in FIG. 6 is an example and not limiting of the invention, including the claims, and other configurations may be used. For example, the description herein discusses that the TRP 600 is configured to perform or performs several functions, but one or more of these functions may be performed by the location server 172 and/or the UE 500 (i.e., the location server 172 and/or the UE 500 may be configured to perform one or more of these functions).

The memory 611 may store software 612 that contains executable program code or software instructions that when executed by the at least one processor 610 may cause the at least one processor 610 to operate as a special purpose computer programmed to perform the functions disclosed herein. As illustrated, the memory 611 may include one or more components or modules that may be implemented by the at least one processor 610 to perform the disclosed functions. While the components or modules are illustrated as software 612 in memory 611 that is executable by the at least one processor 610, it should be understood that the components or modules may be stored in another computer readable medium or may be dedicated hardware either in the at least one processor 610 or off the processor. A number of software modules and data tables may reside in the memory 611 and be utilized by the at least one processor 610 in order to manage both communications and the functionality described herein. It should be appreciated that the organization of the contents of the memory 611 as shown is merely exemplary, and as such the functionality of the modules and/or data structures may be combined, separated, and/or be structured in different ways depending upon the implementation.

The memory 611, for example, may include positioning session module 672 that when implemented by the at least one processor 610 configures the at least one processor 610 to engage in a positioning session for the UE. For example, the one or more processors 610 may be configured to provide PRS beam configuration information, including beam width information to a location server, and to transmit PRS beams per the PRS beam configuration, via the transceiver 615. The one or more processors 610 may be further configured to receive and transmit between the UE and location server one or more messages according to LPP, including Request Capabilities; Provide Capabilities; Request Priority, Provide Priority, Request Assistance Data; Provide Assistance Data; Request Location Information; Provide Location Information; Abort; and Error.

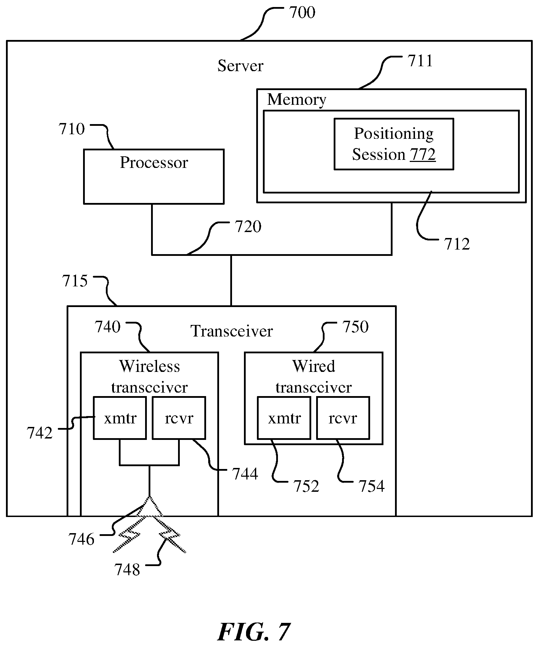

**FIG. 7** shows a server 700, which is an example of the location server 172, such as LMF 270, capable of providing assistance data to the UE that includes PRS beam width information. The server 700 includes a computing platform including at least one processor 710, memory 711 including software (SW) 712, and a transceiver 715. The at least one processor 710, the memory 711, and the transceiver 715 may be communicatively coupled to each other by a bus 720 (which may be configured, e.g., for optical and/or electrical communication). One or more of the shown apparatus (e.g., a wireless interface) may be omitted from the server 700. The at least one processor 710 may include one or more intelligent hardware devices, e.g., a central processing unit (CPU), a microcontroller, an application specific integrated circuit (ASIC), etc. The at least one processor 710 may comprise multiple processors (e.g., including at least one of an application processor, a DSP, a modem processor, a video processor, and/or a sensor processor, similar to that shown in FIG. 5). The memory 711 is a non-transitory storage medium that may include random access memory (RAM)), flash memory, disc memory, and/or read-only memory (ROM), etc. The memory 711 stores the software 712 which may be processor-readable, processor-executable software code containing instructions that are configured to, when executed, cause the at least one processor 710 to operate as a special purpose computer programmed to perform the various functions described herein. Alternatively, the software 712 may not be directly executable by the at least one processor 710 but may be configured to cause the at least one processor 710, e.g., when compiled and executed, to operate as a special purpose computer to perform the various functions described herein. The description may refer only to the at least one processor 710 performing a function, but this includes other implementations such as where the at least one processor 710 executes software and/or firmware. The description may refer to the at least one processor 710 performing a function as shorthand for one or more of the processors contained in the at least one processor 710 performing the function. The description may refer to the server 700 performing a function as shorthand for one or more appropriate components of the server 700 performing the function. The at least one processor 710 may include a memory with stored instructions in addition to and/or instead of the memory 711. Functionality of the at least one processor 710 is discussed more fully below.

The transceiver 715 may include a wireless transceiver 740 and a wired transceiver 750 configured to communicate with other devices through wireless connections and wired connections, respectively. For example, the wireless transceiver 740 may include a transmitter 742 and receiver 744 coupled to one or more antennas 746 for transmitting (e.g., on one or more downlink channels) and/or receiving (e.g., on one or more uplink channels) wireless signals 748 and transducing signals from the wireless signals 748 to wired (e.g., electrical and/or optical) signals and from wired (e.g., electrical and/or optical) signals to the wireless signals 748. Thus, the transmitter 742 may include multiple transmitters that may be discrete components or combined/integrated components, and/or the receiver 744 may include multiple receivers that may be discrete components or combined/integrated components. The wireless transceiver 740 may be configured to communicate signals (e.g., with the UE 500, one or more other UEs, and/or one or more other devices) according to a variety of radio access technologies (RATs) such as 5G New Radio (NR), GSM (Global System for Mobiles), UMTS (Universal Mobile Telecommunications System), AMPS (Advanced Mobile Phone System), CDMA (Code Division Multiple Access), WCDMA (Wideband CDMA), LTE (Long-Term Evolution), LTE Direct (LTE-D), 6GPP LTE-V2X (PC5), IEEE 802.11 (including IEEE 802.11p), WiFi, WiFi Direct (WiFi-D), Bluetooth^{®}, Zigbee etc. The wired transceiver 750 may include a transmitter 752 and a receiver 754 configured for wired communication, e.g., with the network 135 to send communications to, and receive communications from, the TRP 600, for example. The transmitter 752 may include multiple transmitters that may be discrete components or combined/integrated components, and/or the receiver 754 may include multiple receivers that may be discrete components or combined/integrated components. The wired transceiver 750 may be configured, e.g., for optical communication and/or electrical communication.

The configuration of the server 700 shown in FIG. 7 is an example and not limiting of the invention, including the claims, and other configurations may be used. For example, the wireless transceiver 740 may be omitted. Also or alternatively, the description herein discusses that the server 700 is configured to perform or performs several functions, but one or more of these functions may be performed by the TRP 600 and/or the UE 500 (i.e., the TRP 600 and/or the UE 500 may be configured to perform one or more of these functions).

The memory 711 may store software 712 that contains executable program code or software instructions that when executed by the at least one processor 710 may cause the at least one processor 710 to operate as a special purpose computer programmed to perform the functions disclosed herein. As illustrated, the memory 711 may include one or more components or modules that may be implemented by the at least one processor 710 to perform the disclosed functions. While the components or modules are illustrated as software 712 in memory 711 that is executable by the at least one processor 710, it should be understood that the components or modules may be stored in another computer readable medium or may be dedicated hardware either in the at least one processor 710 or off the processor. A number of software modules and data tables may reside in the memory 711 and be utilized by the at least one processor 710 in order to manage both communications and the functionality described herein. It should be appreciated that the organization of the contents of the memory 711 as shown is merely exemplary, and as such the functionality of the modules and/or data structures may be combined, separated, and/or be structured in different ways depending upon the implementation.

The memory 711, for example, may include an positioning session module 772 that when implemented by the at least one processor 710 configures the at least one processor 710 to engage in a positioning session for the UE. For example, the one or more processors 710 may be configured to receive PRS beam configuration information from base stations including beam width information from base stations and to generate assistance data for positioning the UE that includes the PRS beam configuration information, including the beam width information. The one or more processors 610 may be further configured to from and transmit to a UE one or more messages according to LPP, including Request Capabilities; Provide Capabilities; Request Priority, Provide Priority, Request Assistance Data; Provide Assistance Data; Request Location Information; Provide Location Information; Abort; and Error.

Base stations 102 may transmit DL PRS resources in a beam sweeping manner. Base stations 102, such as gNBs in a 5G NR RAT, may use beamforming to focus an RF signal in a specific direction, and to change the directionality of the RF signal, by controlling the phase and relative amplitude of the RF signal transmitted by a plurality of antennas in an antenna array. Using beamforming and changing the direction of the RF signal, the DL PRS resources may be transmitted in different directions.

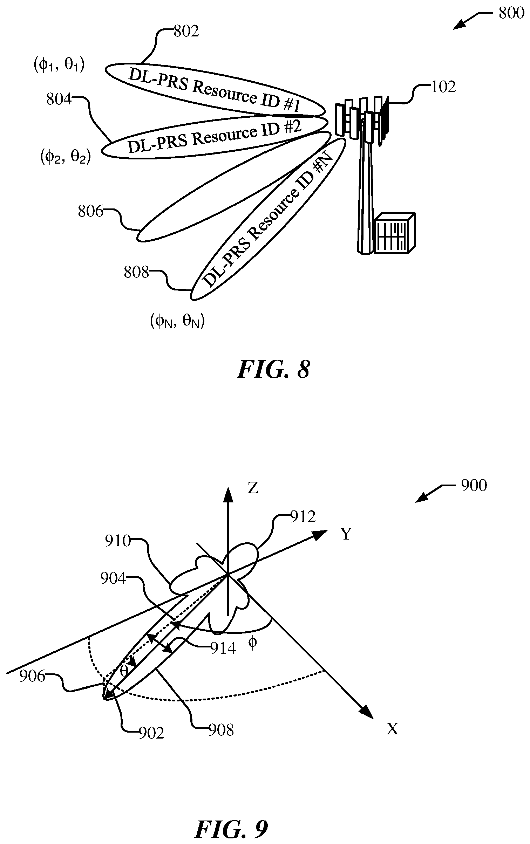

**FIG. 8****,** by way of example, illustrates an environment 800 that includes a base station 102 transmitting DL-PRS resources as a number of directional beams, referred to herein as PRS beams. Each separate PRS beam is produced using a number of separate antennas, which are provided with RF current from the transmitter with the correct phase relationship so that the radio waves from the separate antennas add together to increase the radiation in a desired direction, while cancelling to suppress radiation in undesired directions, to produce the PRS beam. The PRS beam may be produced in different directions, e.g., changing the azimuth angle and elevation angle, without physically moving the antenna panel of the base station 102. FIG. 8, for example, illustrates a number of separate PRS beams 802, 804, 806, and 808 having a different azimuth angle (ϕᵢ) and/or elevation angle (θᵢ), where i=1 to N. Each PRS beam represents a PRS resource, which may be labelled DL-PRS Resource ID#i. The collection of PRS resources produced by the base station 102 is referred to as a PRS resource set. By increasing the number of individual antennas in the antenna panel in the base station 102 used to produce a PRS beam, the width of the PRS beams may be reduced.

**FIG. 9****,** for the sake of reference, illustrates the directionality of a single PRS beam 900 in an X, Y, Z coordinate system. The origin in the coordinate system represents the antenna reference point location for the base station 102. As illustrated, the PRS beam 900 includes a boresight 902, which is the axis of maximum gain or maximum radiated power of the antenna array. The PRS beam 900 includes a main lobe 908, i.e., the lobe that is coincident with the boresight 902, as well as one or more side lobes 910 and a back lobe 912. The projection 904 of the boresight 902 in the horizontal plane, i.e., the XY plane, has an azimuth angle ϕ with respect to a reference direction, e.g., illustrates as X axis, which may be North. Additionally, boresight 902 has an elevation angle θ with respect to the horizontal plane, i.e., in the elevation plane 906 parallel to the Z axis. The main lobe 908 has a beam width 914.

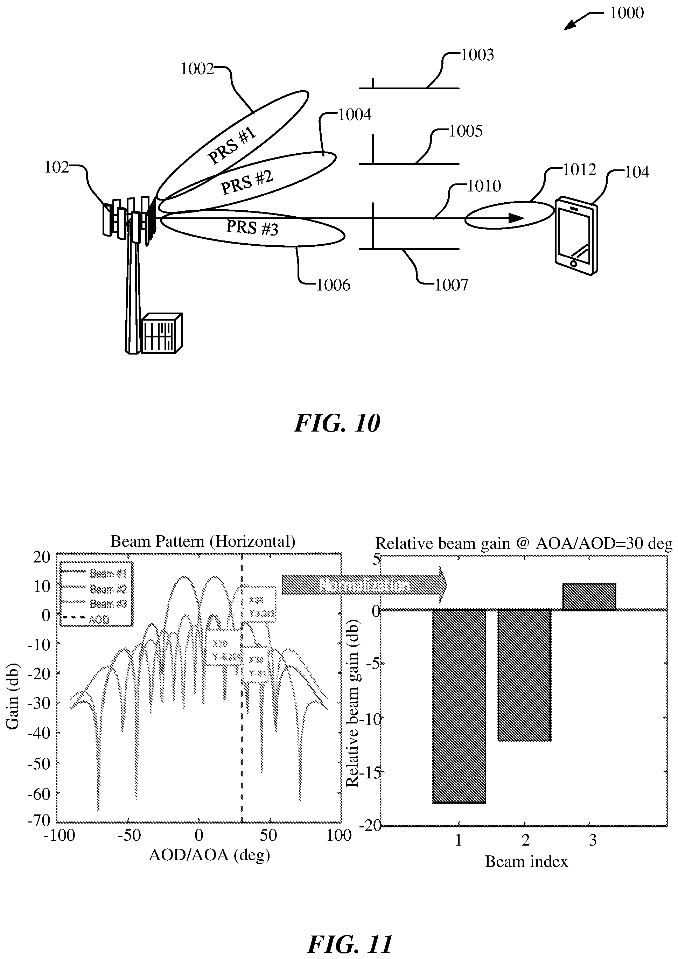

**FIG. 10****,** by way of example, illustrates a DL-AOD procedure 1000 performed by a UE 104. The base station 102, which may be a gNB, transmits PRS resources in a beam-sweeping manner, illustrated as beams 1002, 1004, and 1006, labeled as PRS#1, PRS#2, and PRS#3, respectively. The UE 104 may measure the RSRP of each PRS resource, illustrated by PRS beams 1002, 1004, and 1006, using a beamformed receive beam 1012. The measured RSRP for each PRS beam 1002, 1004, and 1006, as illustrated by the respective graphs 1003, 1005, and 1007, where the height of the bar is proportional to the RSRP for each respective PRS beam. As illustrated, the PRS beam 1006 which is most closely aligned with the line of sight (LOS) 1010 between the base station 102 and the UE 104 has the greatest RSRP. PRS beams 1002 and 1004 (PRS#1 and PRS#2) are not aligned with the LOS 1010, and accordingly, relatively low RSRPs are observed. In contrast, the PRS beam 1006 (PRS#3) is closely aligned with the LOS 1010, and a relatively high RSRP is observed.

In UE-assisted mode, the UE 104 reports the measured RSRPs through LPP protocol to the location server 172, e.g., LMF 270, where the corresponding AODs are estimated and position calculation of the UE 104 is performed. For example, based on the measured RSRPs, the PRS resource most closely aligned with the LOS 1010 to the UE 104 can be determined. The directionality of each PRS source is known by the location server 172 and, accordingly, the direction of the UE 104 with respect to the base station 102 can be determined based on the direction of the PRS resource with the highest RSRP. Additionally, the RSRP may be used to determine the range between the UE 104 and the base station 102. Thus, both the direction and distance with respect to the base station 102 may be determined thereby providing an estimated position of the UE 104.

In UE-based mode, the UE 104 may use assistance data, provided by the location server 172, including the TRP geographic locations, and the PRS beam information (e.g., beam azimuth, elevation) to calculate an estimated position of the UE 104.

**FIG. 11****,** for example, illustrates a graph of simulated beam pattern for PRS#1, PRS#2, PRS#3 with AOD with respect to gain (dB), and illustrates a normalization of the relative beam gain with respect to beam index at 30°. In some implementations, the RSRP measurement vector may be considered as an "RF fingerprint" and the AOD calculation may be performed using a pattern matching approach. Based on the beam pattern and/or relative beam gain, the AOD may be determined.

The location server 172 may provide assistance data to the UE 104 to enable the UE 104 to receive PRS beams from one or more base stations. For example, during UE-based positioning, the location server 172 may provide an NR-PositionCalculationAssistance information element (IE), as described in 3GPP 37.355, to provide assistance data to the UE 104 to enable UE-based downlink positioning. The NR-PositionCalculationAssistance IE, for example, may include a field that provides the location coordinates of the antenna reference points of the TRPs, (e.g., nr-trp-LocationInfo), a field that provides the spatial directions of DL-PRS resources, e.g., PRS beams, for TRPs (e.g., nr-dl-prs-BeamInfo), and a field that provides the time synchronization information between the reference TRP and neighbour TRPs (e.g., nr-rtd-Info), which may be used for RTD measurements.

The use of UE-based downlink positioning advantageously enables new use cases, improves mobility scenarios, and improved performance of existing use cases. For example, assuming the same feedback overhead, the tail positioning error may be improved approximately 30% using UE-based positioning compared to UE-assisted positioning. UE-based positioning further improves scalability and operational range, and provides low UL overhead and low latency. UE-based positioning has low impact on specifications, and has parity with RAT-independent UE-based features. Currently, UE-based positioning is supported for DL-OTDOA and DL-AOD, but additional positioning methods, such as RTT, multi-RTT may be supported.

In addition to providing beam information in assistance data for UE-based positioning, beam information may likewise be provided for UE-assisted positioning if desired.

The location server 172 may provide assistance data to the UE 104 for either UE-based or UE-assisted positioning that includes beam information. For example, Table 2 below, illustrates a NR-DL-PRS-BeamInfo information element (IE) as provided in 3GPP TS 37.355.

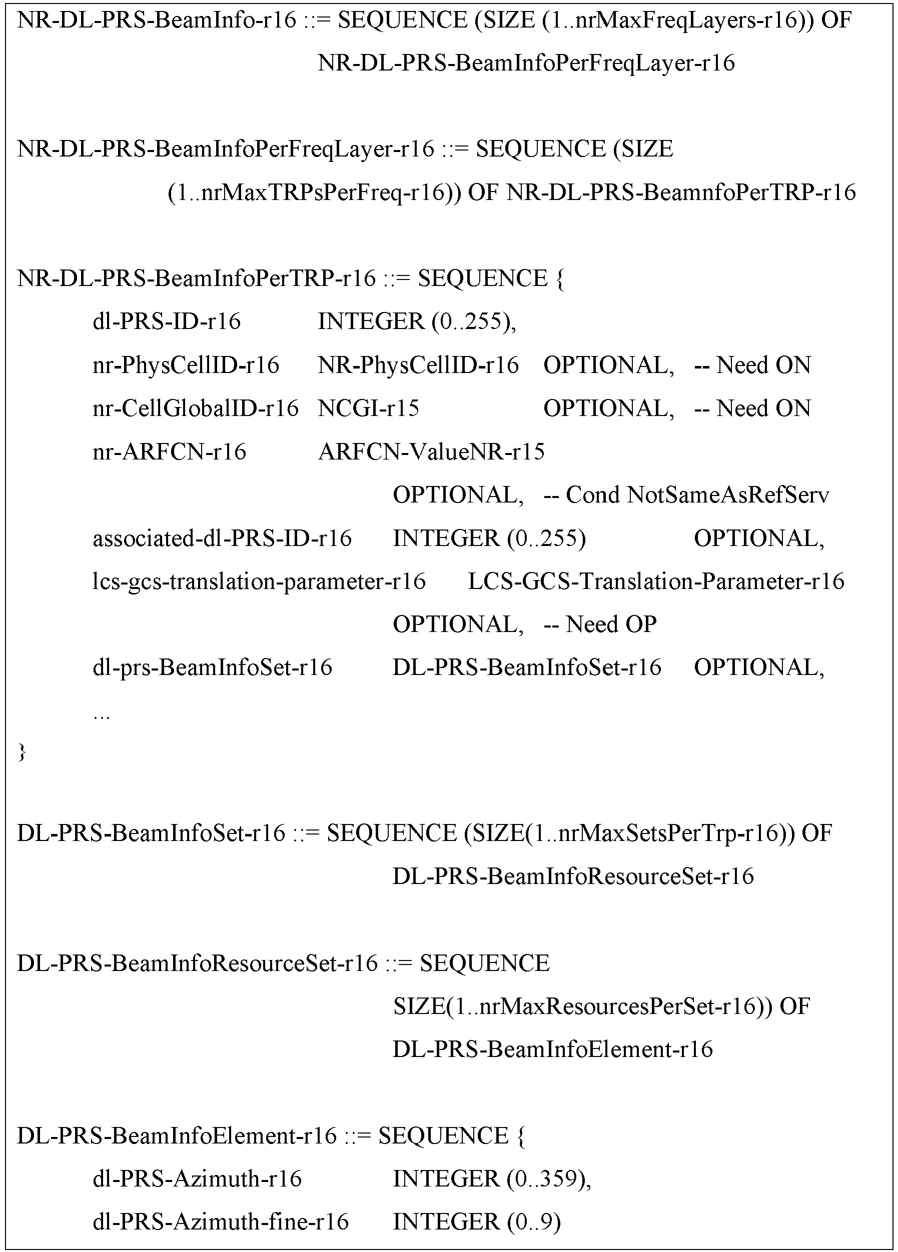

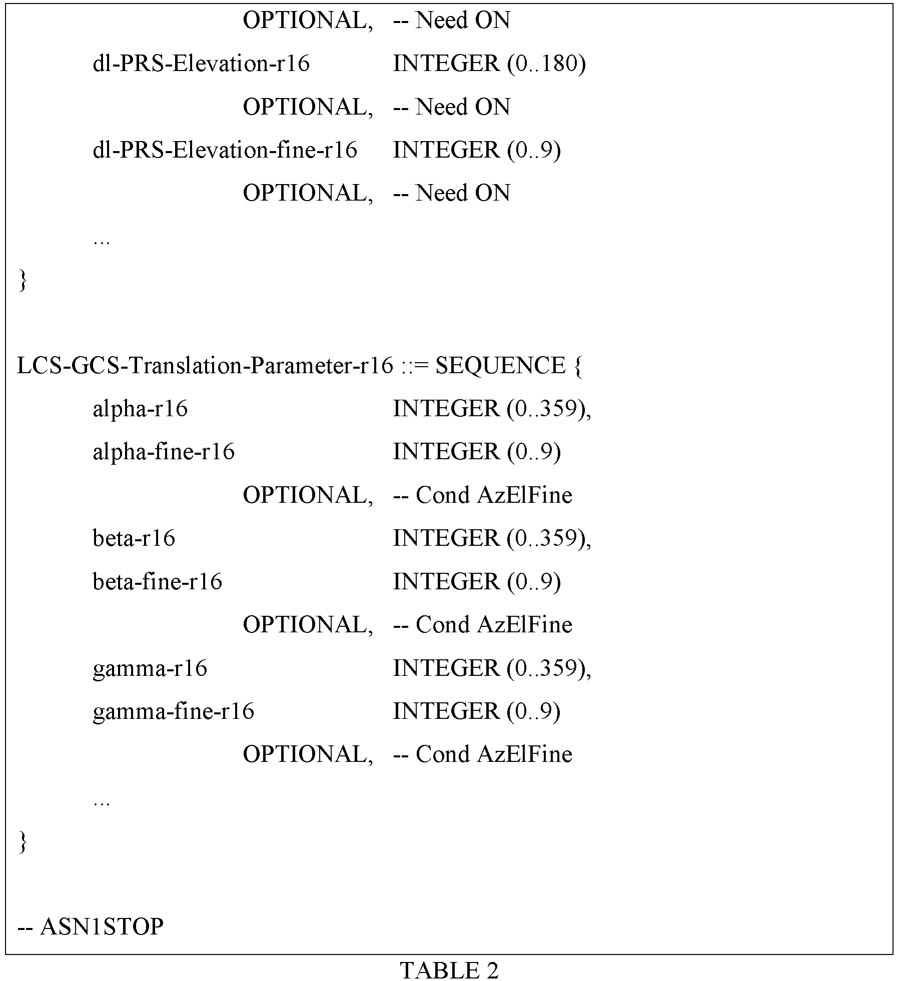

As can be seen in Table, 2, the NR-DL-PRS-BeamInfo IE includes azimuth information and elevation information. For example, the dl-PRS-Azimuth field specifies the azimuth angle of the boresight direction in which the DL-PRS Resources associated with this DL-PRS Resource ID in the DL-PRS Resource Set are transmitted. For a Global Coordinate System (GCS), the azimuth angle is measured counter-clockwise from geographical North. For a Local Coordinate System (LCS), the azimuth angle is measured counter-clockwise from the x-axis of the LCS. Similarly, the dl-PRS-Elevation field specifies the elevation angle of the boresight direction in which the DL-PRS Resources associated with this DL-PRS Resource ID in the DL-PRS Resource Set are transmitted. For a Global Coordinate System (GCS), the elevation angle is measured relative to zenith and positive to the horizontal direction (elevation 0 deg. points to zenith, 90 deg to the horizon). For a Local Coordinate System (LCS), the elevation angle is measured relative to the z-axis of the LCS (elevation 0 deg. points to the z-axis, 90 deg to the x-y plane). The alpha, beta, and gamma fields are related to bearing angle, downtilt angle, and slant angle, respectively, for the translation of the LCS to a GCS. Fields identified with the name "fine" are related to granularity of the corresponding fields.

The NR-DL-PRS-BeamInfo IE, however, fails to provide any beam width information. Knowledge of PRS beam width, as well as other beam parameters, such as information regarding the side lobes or back lobe may be used by the UE 104 to receive PRS beams, and may be used by the UE 104 to adapt the receive antennas for the PRS beams, e.g., to improve power savings. For example, if the PRS beam is a wide angle beam, a single Rx antenna (or reduced number of Rx antennas) will be highly likely to achieve a high quality positioning measurement. The UE 104, for example, may configure its receiver with a single Rx antenna (or reduced number of Rx antennas) to save power consumption.

Accordingly, in one implementation, the assistance data provided to the UE 104 may include more detailed beam-information, which may be used by the UE 104 to receive PRS beams and to enable the Rx antenna adaptation in the UE 104, e.g., for power saving. The UE 104, for example, may receive PRS beam width information from the network, e.g., the location server 172, for each PRS beam that it is expected to process through the assistance data, such as the DL-PRS-Beam-Info IE. For example, the UE 104 may receive PRS configuration for receiving PRS beams, which may include the azimuth angle and the elevation angle along with beam width information for each DL-PRS Resource (PRS beam).

The beam width information provided to the UE 104, for example, may be the beam width of each PRS beam (e.g., beam width 914 of the main lobe 908 shown in FIG. 9). The beam width may be provided based on the power attenuation of the PRS beam, e.g., with respect to the boresight direction (e.g., the axis of maximum gain or maximum radiated power of the antenna array. For example, the beam width may be provided as 3-dB, 6-dB, or 12-dB beam width. Additionally, the beam width may be provided with spatial dimensions, for example, azimuth and elevation. Thus, for the main lobe of a PRS beam, a first beam width may be provided in the azimuth direction, and a second beam width may be provided in the elevation direction.

Additionally or alternatively, the beam width information provided to the UE 104 may include the boresight direction uncertainty and/or a beam width uncertainty. For example, the boresight direction uncertainty may be an angle uncertainty in the direction of the boresight 902 shown in FIG. 9. The beam width uncertainty may be provided based on power attenuation of the PRS beam, e.g., with respect to the boresight direction (e.g., the axis of maximum gain or maximum radiated power of the antenna array. For example, the beam width uncertainty may be provided as be ±0.5-dB, ±1-dB, or ±3-dB. Additionally, the boresight direction uncertainty and the beam width uncertainty may be provided with spatial dimensions, e.g., in terms of azimuth angle and elevation angle.

The beam width information provided to the UE 104 may further include beam information for one or more side lobes and optionally, the back lobe associated with each PRS beam, such as side lobes 910 and back lobe 912, shown in FIG. 9. Beam information for the side lobes and/or back lobe may be considered beam width information as it may affect the reception of the PRS beam by the UE 104. By way of example, the beam information for the side lobes and/or back lobe may be the power attenuation (e.g., -20 dB) of the side lobes and/or back lobe with respect to the boresight direction of each PRS beam. The beam information may further include angle information for the side lobes and/or back lobe relative to the boresight direction. In some implementations, a beam width of the side lobes or back lobe may be provided, similar to the main lobe as discussed above.

In an implementation, the UE 104 may adapt the number of Rx antenna used to receive PRS beams based on the PRS beam width information. Each Rx antenna in the UE 104, for example, has its own receive beam pattern, which includes its beam-width and the power level of the side-lobes/back-lob with respect to the boresight, e.g., similar to the transmitted PRS beam illustrated in FIG. 9. The beam pattern of each Rx antenna indicates its capability to receive signals (for example, PRS beams) within some angles (AOD). If the PRS beam is transmitted as a wide angle beam. A single Rx antenna may be designed to cover the reception of wide angle PRS beams and may be used for a wide angle beam. In some implementations, instead of a single antenna, the UE 104 may reduce the number of Rx antennas used to receive the PRS beam, e.g., from four Rx antennas to two Rx antennas when the PRS beam is transmitted as a wide angle beam. If the PRS beam is transmitted as a relatively narrow beam, the UE 104 may choose to use multiple Rx antennas. For example, to cover reception of a narrow PRS beam, the UE 104 may need to use multiple Rx antennas and thus may increase the number of Rx antennas used, e.g., from a single Rx antenna or two Rx antenna to four Rx antennas.

While the use of a large number of Rx antennas at all times may enhance signal reception, e.g., more antennas permits wide angle or narrow angle Rx beams to be generated by the UE 104, the UE 104 may select to reduce the number of Rx antennas used in order to improve power consumption. By reducing the number of Rx antennas, less power is required for reception of the PRS beams, even though reception performance may not be optimized by the UE 104.

The UE 104 may select the number of Rx antennas based on different types of PRS beam width information, such as the beam width of each PRS beam. For example, if the beam width is greater than a threshold, the UE 104 may select a single Rx antenna (or a reduced number of Rx antennas) to save power. The threshold may be a static predetermined threshold, or may be dynamic threshold based on various factors, such as the type of positioning method being used, quality of signal parameters, etc. If the beam width is less than the threshold, the UE 104 may select an increased number of Rx antennas, e.g., all available Rx antennas, to produce receive beams that can receive the narrow PRS beams with adequate reference signal received quality (RSRQ) or signal-to-interference-plus-noise ratio (SINR).

Additionally, the UE 104 may select the number of Rx antennas based on PRS beam width information such as the boresight direction uncertainty or beam-width uncertainty, e.g., to optimize a trade-off between performance/latency and UE power saving. For example, if the boresight direction uncertainty or beam width uncertainty is large, e.g., greater than a threshold, the UE 104 may reduce the number of Rx antennas used for reception, and, vice versa, if the boresight direction uncertainty or beam width uncertainty is small, e.g., less than the threshold, the UE 104 may increase the number of Rx antennas used for reception. The threshold may be a static predetermined threshold, or may be dynamic threshold based on various factors, such as the type of positioning method being used, quality of signal parameters, etc.

In another example, the UE 104 may select the number of Rx antennas based on PRS beam width information such as the power level of the side lobes. For example, when the power of a side lobe is strong, the UE may be able to receive the PRS from the side lobe with single Rx antenna, even when the main lobe of the PRS beam and the receive beam are not aligned. For some timing-based measurements, e.g., Rx-Tx time difference measurements for RTT based positioning, or for RSTD measurements, a PRS beam captured from the side lobe will still produce a valid measurement, while PRS measurements using side lobes may not be suitable for directional measurements, such as AOD measurements. Thus, if the side lobe power attenuation is greater than a threshold, and the UE 104 is performing timing-based positioning measurements (e.g., Rx-Tx time difference measurements for RTT based positioning or RSTD measurements for TDOA based positioning), the UE 104 may select a reduced number of Rx antennas.

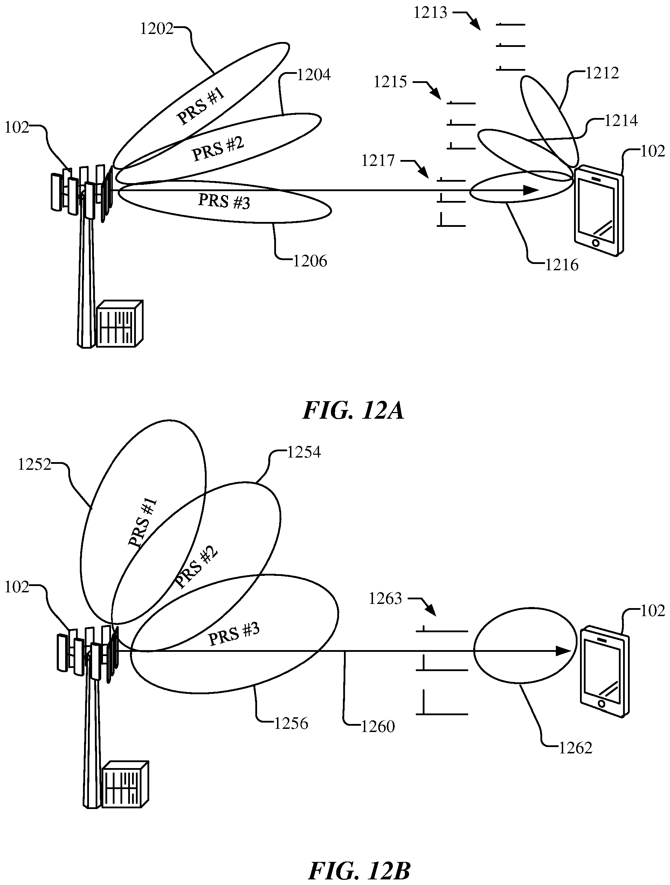

**FIGs. 12A and 12B****,** for example, illustrate the UE 104 receiving relatively narrow and relatively wide PRS beams, respectively. FIG. 12A, for example, is similar to FIG. 10, and illustrates the UE 104 receiving relatively narrow PRS beams 1202, 1204, and 1206. The beam width information for PRS beams 1202, 1204, and 1206 provided to the UE 104 in assistance data, for example, may indicate that the beam widths of PRS beams 1202, 1204, and 1206 are less than a threshold. Alternatively, the boresight direction uncertainty and/or beam width uncertainty may be less than corresponding thresholds. Alternatively, the power level of side lobes associated with the PRS beams 1202, 1204, and 1206 may be less than a threshold (or the UE 104 may be performing direction based positioning measurements, such as AOD measurements). In response to the received beam width information, the UE 104 may select a relatively large number of antennas in the antenna array, e.g., all of the antennas, to generate multiple beamformed receive (Rx) beams 1212, 1214, and 1216. Use of a number of antennas to generate the beamformed Rx beams 1212, 1214, and 1216 provides an adequate RSRQ and/or SINR for the narrow PRS beams 1202, 1204, and 1206. As illustrated, each receive Rx beam measures the RSRP of each of the PRS beams 1202, 1204, and 1206, as illustrated with corresponding sets of RSRP graphs 1213, 1215, and 1217, where each set contains three graphs corresponding to the three PRS beams 1202, 1204, and 1206, where the height of the bar is proportional to the RSRP for each respective PRS beam. As illustrated, the Rx beam 1212 provides the greatest RSRP for PRS beam 1216, indicating that the Rx beam 1212 and PRS beam 1216 are aligned with the LOS 1210.

FIG. 12B is similar to FIG. 12A, but illustrates the UE 104 receiving relatively wide PRS beams 1252, 1254, and 1256. The beam width information for PRS beams 1202, 1204, and 1206 provided to the UE 104 in assistance data, for example, may indicate that the beam widths of PRS beams 1202, 1204, and 1206 is greater than a threshold. Alternatively, the boresight direction uncertainty and/or beam width uncertainty may be greater than corresponding thresholds. Alternatively, the power level of side lobes associated with the PRS beams 1252, 1254, and 1256 may be greater than a threshold and the UE 104 may be performing timing-based positioning measurements, such as Rx-Tx time difference measurements for RTT based positioning or RSTD measurements for TDOA based positioning. In response to the received beam width information, the UE 104 may select a relatively small number of antennas in the antenna array, e.g., a single antenna or a reduced set of antennas, to generate a Rx beam 1262, which may be an omni-direction receive beam or may be a reduced number of Rx wide beams. The UE 104, for example, may select to use of a reduced number of antennas to generate the Rx beam 1262 to reduce power consumption, while still providing an adequate RSRQ and/or SINR for the wide PRS beams 1252, 1254, and 1256. The UE 104 may receive one or more of the PRS beams 1252, 1254, and 1256, with which the UE 104 may perform timing based measurements, such as such as Rx-Tx time difference measurements for RTT based positioning or RSTD measurements for TDOA based positioning. Further, if the UE 104 is performing direction-based positioning measurements, the receive Rx beam 1262 may measures the RSRP of each of the wide PRS beams 1252, 1254, and 1256, as illustrated with corresponding set of RSRP graphs 1263, with which the PRS beam that is most likely aligned to the LOS 1260 with the UE 104 may be determined.

For UE-based positioning, the UE 104 may use the positioning measurements, along with base station location information received in the assistance data and may estimate a location of the UE 104. For UE-assisted positioning, the UE 104 may provide the positioning measurements to a location server 172, e.g., in an LPP provide position information message, and the location server 172 may estimate the location of the UE 104.

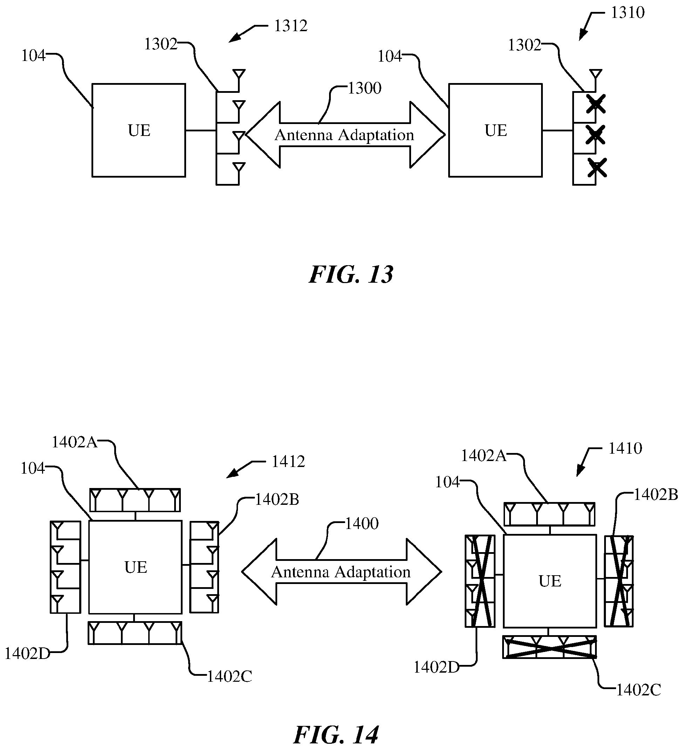

**FIG. 13****,** for example, illustrates an antenna adaptation 1300 of the UE 104 to select a number of receive antennas based on the beam width information for a PRS beam. As illustrated, the UE 104 includes an antenna array 1302 that may be adapted to use a plurality of antennas or a reduced number of antennas. For example, single antenna or a reduced number of antennas may be selected by the UE 104 (as indicated by selection 1310 where an "x" indicates the antenna is not used or is turned off. The single antenna or a reduced number of antennas may be selected when the beam width information received in assistance data indicates the PRS beam has a beam width that is greater than a threshold, or if the boresight direction uncertainty or beam width uncertainty are greater than corresponding thresholds, or the side lobe power level is greater than threshold and the UE is performing a timing-based positioning measurement. If the beam width information received in assistance data indicates the PRS beam has a beam width that is less than a threshold, or that the boresight direction uncertainty or beam width uncertainty are less than corresponding thresholds, or the side lobe power level is less than threshold (or if greater than the threshold, the UE is performing a direction based positioning measurements, such as AOD measurements), then an increased number of antennas, e.g., all of the antennas in the antenna array 1302, may be selected (as indicated by selection 1312) for receiving the PRS beams.

In some implementations, e.g., when the PRS beams are transmitted in a millimeter wave frequency band, e.g., referred to as FR2, the UE 104 may adapt the number of UE Rx antenna panels. For example, in FR2, the UE 104 may include multiple antenna panels placed across the UE 104, e.g., where each antenna panel includes multiple antennas for beamforming Rx beams. The multi-panel design, for example, allows the UE 104 to receive signals from base stations 102 in all directions to maintain a robust connection. The UE 104 may shutdown one or more antenna panels to consume less power based on the beam width information. For example, the PRS beam width information, such as the beam width, beam width uncertainty, boresight direction, boresight direction uncertainty, or the power level of the side lobes or back lobe with respect to the boresight, may be used to select a number of antenna panels for the PRS beam reception. The UE 104 may shutdown antenna panels that are less likely to receive the PRS beam based on the beam width information. For example, if the boresight direction uncertainty or the beam-width uncertainty is large, i.e., greater than corresponding thresholds, the UE 104 may need more Rx antenna panels for reception, or vice versa, if the boresight direction uncertainty or the beam-width uncertainty is small, i.e., less than corresponding thresholds, the UE 104 may need fewer Rx antenna panels for reception. Another example is when the power of a side lobe is strong, e.g., greater than a threshold,, the UE 104 may be able to capture the PRS in its side lobe with single Rx antenna panel, even when the Rx beam and PRS beam are not aligned. Additionally, the UE 104 may use side information, such as motion or rotation information from the sensors 513 shown in FIG. 5, to decide if down-selection of the antenna panels should be triggered or not. For example, if the UE 104 is moving or rotating (which may be detected by sensors 513), the UE 104 may disable the down selection procedure and use all of the antenna panels.

**FIG. 14****,** for example, illustrates an antenna panel adaptation 1400 of the UE 104 to select a number of receive antenna panels based on the beam width information for a PRS beam. As illustrated, the UE 104 includes a number of antenna arrays 1402A, 1402B, 1402C, and 1402D, each of which includes a number of antennas. Based on the beam width information, a single antenna panel or a reduced number of antenna panels may be selected by the UE 104 (as indicated by selection 1410 where an "x" indicates the antenna panels are not used or are turned off. The reduced number of antenna panels may be selected when the beam width information received in assistance data indicates the PRS beam has a beam width that is greater than a threshold, or if the boresight direction uncertainty or beam width uncertainty are greater than corresponding thresholds, or the side lobe power level is greater than threshold and the UE is performing a timing-based positioning measurement. If the beam width information received in assistance data indicates the PRS beam has a beam width that is less than a threshold, or that the boresight direction uncertainty or beam width uncertainty are less than corresponding thresholds, or the side lobe power level is less than threshold (or if greater than the threshold, the UE is performing a direction based positioning measurements, such as AOD measurements), or if the motion or rotation of the UE 104 is detected, then an increased number of antenna panels, e.g., all of the antenna panels, may be selected (as indicated by selection 1412) for receiving the PRS beams.

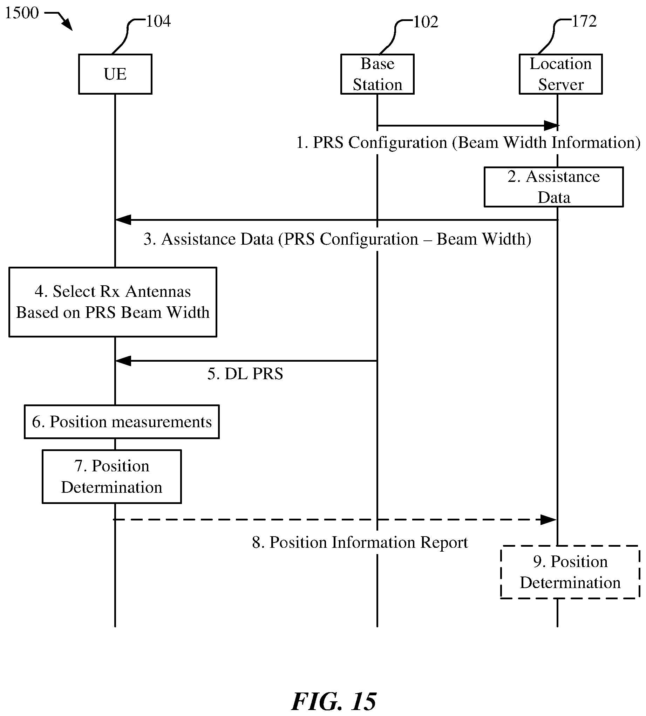

**FIG. 15** is a message flow 1500 illustrating the messaging between the location server 172, a base station 102, and the UE 104 for supporting positioning of the UE using beam width information and selection of Rx antennas based on the beam width information, as discussed herein. The location server 172, for example, may be an LMF 270, and the base station 102 may be a gNB. While a single base station is illustrated, it should be understood that a plurality of base stations may be used. It should be understood that messages related to the support of positioning of the UE using beam width information and selection of Rx antennas based on the beam width information, are illustrated, but that additional messages, including conventional LPP messages, may be used in the message flow 1500.

At stage 1, the base station 102 may provide PRS configuration information to the location server 172. The PRS configuration information may include information related to PRS resources (PRS beams) including azimuth and elevation angles of each PRS beam, as well as beam width information, such as one or more of the beam width, the boresight direction uncertainty, the beam width uncertainty, side lobe and/or back lobe power level, side lobe and/or back lobe power level, side lobe and/or back lobe angles, or a combination thereof.

At stage 2, the location server 172 may generate assistance data for positioning for the UE 104 based on the PRS configuration received from the base station 102.

At stage 3, the location server 172 may send the assistance data, e.g., in an LPP assistance data message, to the UE 104. The assistance data may include the PRS configuration information, including azimuth and elevation angles of each PRS beam, as well as beam width information, such as one or more of the beam width, the boresight direction uncertainty, the beam width uncertainty, side lobe and/or back lobe power level, side lobe and/or back lobe power level, side lobe and/or back lobe angles, or a combination thereof. The assistance data may further include, e.g., the location coordinates of the base station 102 and may include time synchronization information between the base station 102 and a neighbor base station (not shown), e.g., for RTD measurements, e.g., for UE-based positioning. For UE-assisted positioning, the assistance data need not include the location coordinate of the base station 102 or time synchronization information.

At stage 4, the UE 104 may select Rx antennas based on the PRS beam width information provided in the assistance data at stage 3. For example, the UE 104 may select to a reduced number of antennas in the antenna array, or a reduced number of antenna panels, if the beam width information indicates a relatively wide beam, as discussed above. For example, if the beam width of the PRS beam is greater than a threshold, the boresight direction uncertainty or the beam width uncertainty are greater than corresponding uncertainties, or the side lobe and/or back lobe power levels or uncertainties are greater than a threshold (and the UE 104 is performing timing based positioning measurements), then the UE 104 may select a reduced number of antennas (e.g., one antenna) for receiving the PRS beams, or a reduced number of antenna panels for receiving the PRS beams unless the UE 104 is detected to be moving or rotating. On other hand, if the beam width of the PRS beam is less than a threshold, the boresight direction uncertainty or the beam width uncertainty are less than corresponding uncertainties, or the side lobe and/or back lobe power levels or uncertainties are less than a threshold (or if the side lobe and/or back lobe power levels or uncertainties are greater than a threshold but the UE 104 is performing direction-based positioning measurements), then the UE 104 may select an increased number of antennas (e.g., all of the antennas) or antenna panels, for receiving the PRS beams.

At stage 5, the base station 102 transmits the DL PRS beams consistent with the PRS configuration information provided to the location server 172 at stage 1 and provided to the UE 104 in assistance data at stage 3.

At stage 6, the UE 104 performs position measurements with the PRS beams received with the Rx antennas as adapted in stage 4. The position measurements, for example, may be direction based measurements, such as AOD measurements, or timing based measurements, such as such as Rx-Tx time difference measurements for RTT based positioning or RSTD measurements for TDOA based positioning.

At stage 7, the UE 104 may determine a position estimate for the UE 104, for UE-based positioning, using the position measurements from stage 6 and base station location information received in assistance data from stage 3. Alternatively, as illustrated with dotted lines, for UE-assisted positioning the UE 104 may send the positioning information to the location server 172, e.g., in a position information message at stage 8, and the location server 172 may determine a position estimate for the UE 104 at stage 9.

**FIG. 16** shows a flowchart for an exemplary process 1600 for supporting positioning of a user equipment (UE) in a wireless network performed by the UE, such as UE 104, in a manner consistent with disclosed implementations.

At block 1602, the UE receives a positioning reference signal (PRS) configuration for receiving PRS beams, the PRS configuration comprising an azimuth angle and elevation angle and beam width information for each PRS beam, e.g., as illustrated at stage 3 of FIG. 15. A means for receiving a positioning reference signal (PRS) configuration for receiving PRS beams, the PRS configuration comprising an azimuth angle and elevation angle and beam width information for each PRS beam may include the wireless transceiver 540 and one or more processors 510 with dedicated hardware or implementing executable code or software instructions 512 in memory 511, such as the positioning session module 572, in UE 500 shown in FIG. 5.

At block 1604, the UE receives the PRS beams based on the PRS configuration, e.g., , e.g., as illustrated at stage 5 of FIG. 15. A means for receiving the PRS beams based on the PRS configuration may include the wireless transceiver 540 and one or more processors 510 with dedicated hardware or implementing executable code or software instructions 512 in memory 511, such as the positioning session module 572, in UE 500 shown in FIG. 5.

At block 1606, the UE performs positioning measurements with the PRS beams, e.g., , e.g., as illustrated at stage 6 of FIG. 15. A means for performing positioning measurements with the PRS beams may include the wireless transceiver 540 and one or more processors 510 with dedicated hardware or implementing executable code or software instructions 512 in memory 511, such as the positioning session module 572, in UE 500 shown in FIG. 5.

In one implementation, the beam width information for each PRS beam may include a beam width of each beam as discussed at stage 3 of FIG. 15. For example, the beam width of each beam may be provided based on power attenuation in a main lobe of the PRS beam. The beam width of each beam may further be provided with spatial dimensions comprising azimuth and elevation.

In one implementation, the beam width information for each PRS beam may include a boresight direction uncertainty and a beam width uncertainty as discussed at stage 3 of FIG. 15. For example, the boresight direction uncertainty and the beam width uncertainty are provided based on power attenuation in a main lobe of the PRS beam. The boresight direction uncertainty and the beam width uncertainty may further be provided with spatial dimensions comprising azimuth and elevation.

In one implementation, the beam width information further comprises beam information for one or more side lobes and back lobe associated with each PRS beam as discussed at stage 3 of FIG. 15. The beam information for the one or more side lobes and back lobe associated with each PRS beam may include power attenuation relative to a boresight of each PRS beam. The beam information for the one or more side lobes and back lobe associated with each PRS beam may further include angle information relative to the boresight of each PRS beam.

As illustrated in FIG. 16 with dotted lines at block 1608, according to the claimed invention, the UE selects antennas for receiving the PRS beams based on the beam width information for each PRS beam, e.g., as illustrated at stage 4 of FIG. 15. A means for selecting antennas for receiving the PRS beams based on the beam width information for each PRS beam may include the wireless transceiver 540 and one or more processors 510 with dedicated hardware or implementing executable code or software instructions 512 in memory 511, such as the Rx antenna selection module 574, in UE 500 shown in FIG. 5.

In some implementations, the UE may select the antennas for receiving the PRS beams based on the beam width information for each PRS beam by selecting a first number of antennas for receiving a PRS beam when the beam width information for the PRS beam indicates a beam width is greater than a threshold and selecting a second number of antennas for receiving the PRS beam when the beam width information for the PRS beam indicates the beam width is less than the threshold, wherein the first number of antennas is smaller than the second number of antennas, e.g., as discussed in FIG. 13. The first number of antennas, for example, may be one antenna. A means for selecting a first number of antennas for receiving a PRS beam when the beam width information for the PRS beam indicates a beam width is greater than a threshold and selecting a second number of antennas for receiving the PRS beam when the beam width information for the PRS beam indicates the beam width is less than the threshold, wherein the first number of antennas is smaller than the second number of antennas may include the wireless transceiver 540 and one or more processors 510 with dedicated hardware or implementing executable code or software instructions 512 in memory 511, such as the Rx antenna selection module 574, in UE 500 shown in FIG. 5.

According to the claimed invention, the UE in a first option selects the antennas for receiving the PRS beams based on the beam width information for each PRS beam by selecting a first number of antennas for receiving a PRS beam when the beam width information for the PRS beam indicates at least one of a boresight direction uncertainty and a beam width uncertainty for the PRS beam is greater than a threshold and selecting a second number of antennas for receiving the PRS beam when the beam width information for the PRS beam indicates at least one of a boresight direction uncertainty and a beam width uncertainty for the PRS beam is less than the threshold, wherein the first number of antennas is smaller than the second number of antennas, e.g., as discussed in FIG. 13. A means for selecting a first number of antennas for receiving a PRS beam when the beam width information for the PRS beam indicates at least one of a boresight direction uncertainty and a beam width uncertainty for the PRS beam is greater than a threshold and selecting a second number of antennas for receiving the PRS beam when the beam width information for the PRS beam indicates at least one of a boresight direction uncertainty and a beam width uncertainty for the PRS beam is less than the threshold, wherein the first number of antennas is smaller than the second number of antennas may include the wireless transceiver 540 and one or more processors 510 with dedicated hardware or implementing executable code or software instructions 512 in memory 511, such as the Rx antenna selection module 574, in UE 500 shown in FIG. 5.

According to the claimed invention, the UE in a second option selects the antennas for receiving the PRS beams based on the beam width information for each PRS beam by reducing a number of antennas used for receiving a PRS beam when the beam width information for the PRS beam indicates one or more side lobes and back lobe associated with the PRS beam has a power attenuation relative to a boresight of the PRS beam that is greater than a threshold and the positioning measurements comprise time-based positioning measurements, e.g., as discussed in FIG. 13. A means for reducing a number of antennas used for receiving a PRS beam when the beam width information for the PRS beam indicates one or more side lobes and back lobe associated with the PRS beam has a power attenuation relative to a boresight of the PRS beam that is greater than a threshold and the positioning measurements comprise time-based positioning measurements may include the wireless transceiver 540 and one or more processors 510 with dedicated hardware or implementing executable code or software instructions 512 in memory 511, such as the Rx antenna selection module 574, in UE 500 shown in FIG. 5.

In some implementations, the PRS beams may be transmitted in a millimeter wave frequency band, and the UE may include multiple antenna panels. The UE may select the number of antennas for receiving the PRS beams based on the beam width information for each PRS beam by selecting from a number of antenna panels at least partially based on the beam width information for each PRS beam, e.g., as discussed in FIG. 14. A means for selecting from a number of antenna panels at least partially based on the beam width information for each PRS beam may include the wireless transceiver 540 and one or more processors 510 with dedicated hardware or implementing executable code or software instructions 512 in memory 511, such as the Rx antenna selection module 574, in UE 500 shown in FIG. 5. For example, in some implementations, selecting the number of antenna panels at least partially based on the beam width information for each PRS beam may include turning off one or more one or more antenna panels at least partially based on one or more of a boresight direction, a boresight direction uncertainty, a beam width, a beam width uncertainty, or a combination thereof, e.g., as discussed at stage 14. For example, selecting the number of antenna panels at least partially based on the beam width information for each PRS beam may include turning off one or more one or more antenna panels at least partially based on one or more of a boresight direction uncertainty and a beam width uncertainty being less than a threshold, e.g., as discussed at stage 14. For example, selecting from the number of antenna panels at least partially based on the beam width information for each PRS beam may include turning off one or more one or more antenna panels at least partially based on a power level of one or more side lobes and back lobe associated with the PRS beam being greater than a threshold and the positioning measurements comprise time-based positioning measurements, e.g., as discussed at stage 14. Selecting a number of antenna panels may be further based on movement or rotation of the UE.

**FIG. 17** shows a flowchart for an exemplary process 1700 for supporting positioning of a user equipment (UE) in a wireless network performed by a location server, such as location server 172 or LMF 270, in a manner consistent with disclosed implementations.

At block 1702, the location server receives a positioning reference signal (PRS) configuration from one or more base stations, the PRS configuration for PRS beams transmitted by the one or more base stations, the PRS configuration comprising an azimuth angle and elevation angle and beam width information for each PRS beam, e.g., as illustrated at stage 1 of FIG. 15. A means for receiving a positioning reference signal (PRS) configuration from one or more base stations, the PRS configuration for PRS beams transmitted by the one or more base stations, the PRS configuration comprising an azimuth angle and elevation angle and beam width information for each PRS beam may include the transceiver 715 and one or more processors 710 with dedicated hardware or implementing executable code or software instructions 712 in memory 711, such as positioning session module 772, in server 700 shown in FIG. 7.

At block 1704, the location server prepares positioning assistance data for the UE comprising the PRS configuration for receiving PRS beams transmitted by the one or more base stations, the assistance data comprising the azimuth angle and the elevation angle and the beam width information for each PRS beam, e.g., as illustrated at stage 1 of FIG. 15. For example, in one implementation, the positioning assistance data may further include locations of the one or more base stations for UE based positioning. A means for preparing positioning assistance data for the UE comprising the PRS configuration for receiving PRS beams transmitted by the one or more base stations, the assistance data comprising the azimuth angle and the elevation angle and the beam width information for each PRS beam may include the one or more processors 710 with dedicated hardware or implementing executable code or software instructions 712 in memory 711, such as positioning session module 772, in server 700 shown in FIG. 7.

At block 1706, the location server sends an assistance data message to the UE including the positioning assistance data, e.g., as illustrated at stage 1 of FIG. 15. A means for sending an LPP assistance data message to the UE including the positioning assistance data may include the transceiver 715 and one or more processors 710 with dedicated hardware or implementing executable code or software instructions 712 in memory 711, such as positioning session module 772, in server 700 shown in FIG. 7.

In one implementation, the beam width information for each PRS beam may include a beam width of each beam as discussed at stage 3 of FIG. 15. For example, the beam width of each beam may be provided based on power attenuation in a main lobe of the PRS beam. The beam width of each beam may further be provided with spatial dimensions comprising azimuth and elevation.

In one implementation, the beam width information for each PRS beam may include a boresight direction uncertainty and a beam width uncertainty as discussed at stage 3 of FIG. 15. For example, the boresight direction uncertainty and the beam width uncertainty are provided based on power attenuation in a main lobe of the PRS beam. The boresight direction uncertainty and the beam width uncertainty may further be provided with spatial dimensions comprising azimuth and elevation.

In one implementation, the beam width information further comprises beam information for one or more side lobes and back lobe associated with each PRS beam as discussed at stage 3 of FIG. 15. The beam information for the one or more side lobes and back lobe associated with each PRS beam may include power attenuation relative to a boresight of each PRS beam. The beam information for the one or more side lobes and back lobe associated with each PRS beam may further include angle information relative to the boresight of each PRS beam.

Reference throughout this specification to "one example", "an example", "certain examples", or "exemplary implementation" means that a particular feature, structure, or characteristic described in connection with the feature and/or example may be included in at least one feature and/or example of claimed subject matter. Thus, the appearances of the phrase "in one example", "an example", "in certain examples" or "in certain implementations" or other like phrases in various places throughout this specification are not necessarily all referring to the same feature, example, and/or limitation. Furthermore, the particular features, structures, or characteristics may be combined in one or more examples and/or features.

Some portions of the detailed description included herein are presented in terms of algorithms or symbolic representations of operations on binary digital signals stored within a memory of a specific apparatus or special purpose computing device or platform. In the context of this particular specification, the term specific apparatus or the like includes a general purpose computer once it is programmed to perform particular operations pursuant to instructions from program software. Algorithmic descriptions or symbolic representations are examples of techniques used by those of ordinary skill in the signal processing or related arts to convey the substance of their work to others skilled in the art. An algorithm is here, and generally, is considered to be a self-consistent sequence of operations or similar signal processing leading to a desired result. In this context, operations or processing involve physical manipulation of physical quantities. Typically, although not necessarily, such quantities may take the form of electrical or magnetic signals capable of being stored, transferred, combined, compared or otherwise manipulated. It has proven convenient at times, principally for reasons of common usage, to refer to such signals as bits, data, values, elements, symbols, characters, terms, numbers, numerals, or the like. It should be understood, however, that all of these or similar terms are to be associated with appropriate physical quantities and are merely convenient labels. Unless specifically stated otherwise, as apparent from the discussion herein, it is appreciated that throughout this specification discussions utilizing terms such as "processing," "computing," "calculating," "determining" or the like refer to actions or processes of a specific apparatus, such as a special purpose computer, special purpose computing apparatus or a similar special purpose electronic computing device. In the context of this specification, therefore, a special purpose computer or a similar special purpose electronic computing device is capable of manipulating or transforming signals, typically represented as physical electronic or magnetic quantities within memories, registers, or other information storage devices, transmission devices, or display devices of the special purpose computer or similar special purpose electronic computing device.

In the preceding detailed description, numerous specific details have been set forth to provide a thorough understanding of claimed subject matter. However, it will be understood by those skilled in the art that claimed subject matter may be practiced without these specific details. In other instances, methods and apparatuses that would be known by one of ordinary skill have not been described in detail so as not to obscure claimed subject matter.

The terms, "and", "or", and "and/or" as used herein may include a variety of meanings that also are expected to depend at least in part upon the context in which such terms are used. Typically, "or" if used to associate a list, such as A, B or C, is intended to mean A, B, and C, here used in the inclusive sense, as well as A, B or C, here used in the exclusive sense. In addition, the term "one or more" as used herein may be used to describe any feature, structure, or characteristic in the singular or may be used to describe a plurality or some other combination of features, structures or characteristics. Though, it should be noted that this is merely an illustrative example and claimed subject matter is not limited to this example.

While there has been illustrated and described what are presently considered to be example features, it will be understood by those skilled in the art that various other modifications may be made, without departing from claimed subject matter. Additionally, many modifications may be made to adapt a particular situation to the teachings of claimed subject matter without departing from the central concept described herein.

In view of this description embodiments may include different combinations of features.

Therefore, it is intended that claimed subject matter not be limited to the particular examples disclosed, but that such claimed subject matter may also include all aspects falling within the scope of appended claims.

## Claims

1. A method performed by a user equipment, UE, for positioning the UE, comprising:
receiving (1602) a positioning reference signal, PRS, configuration for receiving PRS beams, the PRS configuration comprising an azimuth angle and elevation angle and beam width information for each PRS beam;
selecting (1608) antennas for receiving the PRS beams based on the beam width information for each PRS beam;
receiving (1604) the PRS beams based on the PRS configuration; and
performing (1606) positioning measurements with the PRS beams;
wherein selecting the antennas for receiving the PRS beams based on the beam width information for each PRS beam comprises:
a) selecting a first number of antennas for receiving a PRS beam when the beam width information for the PRS beam indicates at least one of a beam width, a boresight direction uncertainty and a beam width uncertainty for the PRS beam is greater than a threshold and selecting a second number of antennas for receiving the PRS beam when the beam width information for the PRS beam indicates at least one of the beam width, the boresight direction uncertainty and the beam width uncertainty for the PRS beam is less than the threshold, wherein the first number of antennas is smaller than the second number of antennas; or
b) reducing a number of antennas used for receiving a PRS beam when the beam width information for the PRS beam indicates one or more side lobes and back lobe associated with the PRS beam has a power attenuation relative to a boresight of the PRS beam that is greater than a threshold and the positioning measurements comprise time-based positioning measurements.

2. The method of claim 1, wherein the beam width information for each PRS beam comprises a beam width of each beam.

3. The method of claim 2, wherein the beam width of each beam is provided based on power attenuation in a main lobe of the PRS beam.

4. The method of claim 1, wherein the beam width information for each PRS beam comprises a boresight direction uncertainty and a beam width uncertainty.

5. The method of claim 4, wherein the boresight direction uncertainty and the beam width uncertainty are provided based on power attenuation in a main lobe of the PRS beam.

6. The method of claim 1, wherein the beam width information for each PRS beam comprises beam information for one or more side lobes and back lobe associated with each PRS beam.

7. The method of claim 6, wherein the beam information for the one or more side lobes and back lobe associated with each PRS beam comprises power attenuation relative to a boresight of each PRS beam.

8. The method of claim 1, wherein the PRS beams are transmitted in a millimeter wave frequency band, and wherein the UE comprises multiple antenna panels; wherein selecting a number of antennas for receiving the PRS beams based on the beam width information for each PRS beam comprises selecting a number of antenna panels at least partially based on the beam width information for each PRS beam.

9. A user equipment, UE configured for positioning, comprising:
a wireless transceiver configured to wirelessly communicate with entities in a wireless network;
at least one memory;
at least one processor coupled to the wireless transceiver and the at least one memory, wherein the at least one processor is configured to:
receive (1602) a positioning reference signal, PRS configuration for receiving PRS beams, the PRS configuration comprising an azimuth angle and elevation angle and beam width information for each PRS beam;
select (1608) antennas for receiving the PRS beams based on the beam width information for each PRS beam;
receive (1604) the PRS beams based on the PRS configuration; and
perform (1606) positioning measurements with the PRS beams;
wherein the at least one processor is configured to select the antennas for receiving the PRS beams based on the beam width information for each PRS beam by being configured to:
a) select a first number of antennas for receiving a PRS beam when the beam width information for the PRS beam indicates at least one of a beam width, a boresight direction uncertainty and a beam width uncertainty for the PRS beam is greater than a threshold and select a second number of antennas for receiving the PRS beam when the beam width information for the PRS beam indicates at least one of the beam width, the boresight direction uncertainty and the beam width uncertainty for the PRS beam is less than the threshold, wherein the first number of antennas is smaller than the second number of antennas; or
b) reduce a number of antennas used for receiving a PRS beam when the beam width information for the PRS beam indicates one or more side lobes and back lobe associated with the PRS beam has a power attenuation relative to a boresight of the PRS beam that is greater than a threshold and the positioning measurements comprise time-based positioning measurements.

10. The UE of claim 9, wherein the beam width information for each PRS beam comprises a beam width of each beam, preferably wherein the beam width of each beam is provided based on power attenuation in a main lobe of the PRS beam.

11. The UE of claim 9, wherein the beam width information for each PRS beam comprises a boresight direction uncertainty and a beam width uncertainty, preferably wherein the boresight direction uncertainty and the beam width uncertainty are provided based on power attenuation in a main lobe of the PRS beam.

12. The UE of claim 9, wherein the beam width information for each PRS beam comprises beam information for one or more side lobes and back lobe associated with each PRS beam, preferably, wherein the beam information for the one or more side lobes and back lobe associated with each PRS beam comprises power attenuation relative to a boresight of each PRS beam.

13. The UE of claim 9, wherein the PRS beams are transmitted in a millimeter wave frequency band, and wherein the UE comprises multiple antenna panels; wherein the at least one processor is further configured to select a number of antennas for receiving the PRS beams based on the beam width information for each PRS beam by being configured to select a number of antenna panels at least partially based on the beam width information for each PRS beam.

14. A non-transitory storage medium including program code stored thereon, the program code is operable to configure at least one processor in a user equipment, UE, to perform the method of any one of claims 1 to 8, when the program code is executed by the at least one processor.

## Patentansprüche

1. Verfahren, durchgeführt von einem UE (User Equipment) zum Orten des UE, das Folgendes beinhaltet:
Empfangen (1602) einer PRS-(Positioning Reference Signal)-Konfiguration zum Empfangen von PRS-Strahlen, wobei die PRS-Konfiguration einen Azimutwinkel und einen Elevationswinkel sowie Strahlbreiteninformationen für jeden PRS-Strahl umfasst;
Auswählen (1608) von Antennen zum Empfangen der PRS-Strahlen auf der Basis der Strahlbreiteninformationen für jeden PRS-Strahl;
Empfangen (1604) der PRS-Strahlen auf der Basis der PRS-Konfiguration; und
Durchführen (1606) von Positionsmessungen mit den PRS-Strahlen;
wobei das Auswählen der Antennen zum Empfangen der PRS-Strahlen auf der Basis der Strahlbreiteninformationen für jeden PRS-Strahl Folgendes beinhaltet:
a) Auswählen einer ersten Anzahl von Antennen zum Empfangen eines PRS-Strahls, wenn die Strahlbreiteninformationen für den PRS-Strahl angeben, dass mindestens eines von einer Strahlbreite, einer Visierrichtungsunsicherheit und einer Strahlbreitenunsicherheit für den PRS-Strahl größer als ein Schwellenwert ist, und Auswählen einer zweiten Anzahl von Antennen zum Empfangen des PRS-Strahls, wenn die Strahlbreiteninformationen für den PRS-Strahl angeben, dass mindestens eines von der Strahlbreite, der Visierrichtungsunsicherheit und der Strahlbreitenunsicherheit für den PRS-Strahl kleiner als der Schwellenwert ist, wobei die erste Anzahl von Antennen kleiner ist als die zweite Anzahl von Antennen; oder
b) Reduzieren einer Anzahl von zum Empfangen eines PRS-Strahls verwendeten Antennen, wenn die Strahlbreiteninformationen für den PRS-Strahl angeben, dass eine oder mehrere Nebenkeulen und eine Rückkeule in Assoziation mit dem PRS-Strahl eine Leistungsdämpfung relativ zu einer Visierlinie des PRS-Strahls aufweisen, die größer als ein Schwellenwert ist, und die Positionsmessungen zeitbasierte Positionsmessungen umfassen.

2. Verfahren nach Anspruch 1, wobei die Strahlbreiteninformationen für jeden PRS-Strahl eine Strahlbreite jedes Strahls umfassen.

3. Verfahren nach Anspruch 2, wobei die Strahlbreite jedes Strahls auf der Basis von Leistungsdämpfung in einer Hauptkeule des PRS-Strahls bereitgestellt wird.

4. Verfahren nach Anspruch 1, wobei die Strahlbreiteninformationen für jeden PRS-Strahl eine Visierrichtungsunsicherheit und eine Strahlbreitenunsicherheit umfassen.

5. Verfahren nach Anspruch 4, wobei die Visierrichtungsunsicherheit und die Strahlbreitenunsicherheit auf der Basis von Leistungsdämpfung in einer Hauptkeule des PRS-Strahls bereitgestellt werden.

6. Verfahren nach Anspruch 1, wobei die Strahlbreiteninformationen für jeden PRS-Strahl Strahlinformationen für eine oder mehrere Nebenkeulen und eine Rückkeule in Assoziation mit jedem PRS-Strahl umfassen.

7. Verfahren nach Anspruch 6, wobei die Strahlinformationen für die ein oder mehreren Nebenkeulen und die Rückkeule in Assoziation mit jedem PRS-Strahl Leistungsdämpfung relativ zu einer Visierrichtung jedes PRS-Strahls umfassen.

8. Verfahren nach Anspruch 1, wobei die PRS-Strahlen in einem Millimeterwellenfrequenzband übertragen werden und wobei das UE mehrere Antennenpanels umfasst; wobei das Auswählen einer Anzahl von Antennen zum Empfangen der PRS-Strahlen auf der Basis der Strahlbreiteninformationen für jeden PRS-Strahl das Auswählen einer Anzahl von Antennenpanels zumindest teilweise auf der Basis der Strahlbreiteninformationen für jeden PRS-Strahl beinhaltet.

9. UE (User Equipment), konfiguriert zur Ortung, das Folgendes umfasst:
einen drahtlosen Transceiver, der zum drahtlosen Kommunizieren mit Entitäten in einem drahtlosen Netzwerk konfiguriert ist;
mindestens einen Speicher;
mindestens einen Prozessor, der mit dem drahtlosen Transceiver und dem mindestens einen Speicher gekoppelt ist, wobei der mindestens eine Prozessor konfiguriert ist zum:
Empfangen (1602) einer PRS-(Positioning Reference Signal)-Konfiguration zum Empfangen von PRS-Strahlen, wobei die PRS-Konfiguration einen Azimutwinkel und einen Elevationswinkel sowie
Strahlbreiteninformationen für jeden PRS-Strahl umfasst;
Auswählen (1608) von Antennen zum Empfangen der PRS-Strahlen auf der Basis der
Strahlbreiteninformationen für jeden PRS-Strahl;
Empfangen (1604) der PRS-Strahlen auf der Basis der PRS-Konfiguration; und
Durchführen (1606) von Positionsmessungen mit den PRS-Strahlen;
wobei der mindestens eine Prozessor konfiguriert ist zum Auswählen der Antennen zum Empfangen der PRS-Strahlen auf der Basis der Strahlbreiteninformationen für jeden PRS-Strahl, indem er konfiguriert ist zum:
a) Auswählen einer ersten Anzahl von Antennen zum Empfangen eines PRS-Strahls, wenn die Strahlbreiteninformationen für den PRS-Strahl angeben, dass mindestens eines von einer Strahlbreite, einer Visierrichtungsunsicherheit und einer Strahlbreitenunsicherheit für den PRS-Strahl größer als ein Schwellenwert ist, und Auswählen einer zweiten Anzahl von Antennen zum Empfangen des PRS-Strahls, wenn die Strahlbreiteninformationen für den PRS-Strahl angeben, dass mindestens eines von der Strahlbreite, der Visierrichtungsunsicherheit und der Strahlbreitenunsicherheit für den PRS-Strahl kleiner als der Schwellenwert ist, wobei die erste Anzahl von Antennen kleiner ist als die zweite Anzahl von Antennen; oder
b) Reduzieren einer Anzahl von zum Empfangen eines PRS-Strahls verwendeten Antennen, wenn die Strahlbreiteninformationen für den PRS-Strahl angeben, dass eine oder mehrere Nebenkeulen und eine Rückkeule in Assoziation mit dem PRS-Strahl eine Leistungsdämpfung relativ zu einer Visierlinie des PRS-Strahls aufweisen, die größer als ein Schwellenwert ist, und die Positionsmessungen zeitbasierte Positionsmessungen umfassen.

10. UE nach Anspruch 9,
wobei die Strahlbreiteninformationen für jeden PRS-Strahl eine Strahlbreite jedes Strahls umfassen, wobei vorzugsweise die Strahlbreite jedes Strahls auf der Basis von Leistungsdämpfung in einer Hauptkeule des PRS-Strahls bereitgestellt wird.

11. UE nach Anspruch 9,
wobei die Strahlbreiteninformationen für jeden PRS-Strahl eine Visierrichtungsunsicherheit und eine Strahlbreitenunsicherheit umfassen, wobei vorzugsweise die Visierrichtungsunsicherheit und die Strahlbreitenunsicherheit auf der Basis von Leistungsdämpfung in einer Hauptkeule des PRS-Strahls bereitgestellt werden.

12. UE nach Anspruch 9,
wobei die Strahlbreiteninformationen für jeden PRS-Strahl Strahlinformationen für eine oder mehrere Nebenkeulen und eine Rückkeule in Assoziation mit jedem PRS-Strahl umfasst, wobei vorzugsweise die Strahlinformationen für die eine oder mehreren Nebenkeulen und die Rückkeule in Assoziation mit jedem PRS-Strahl Leistungsdämpfung relativ zu einer Visierlinie jedes PRS-Strahls umfassen.

13. UE nach Anspruch 9, wobei die PRS-Strahlen in einem Millimeterwellenfrequenzband übertragen werden, und wobei das UE mehrere Antennenpanels umfasst; wobei der mindestens eine Prozessor ferner konfiguriert ist zum Auswählen einer Anzahl von Antennen zum Empfangen der PRS-Strahlen auf der Basis der Strahlbreiteninformationen für jeden PRS-Strahl, indem er zum Auswählen einer Anzahl von Antennenpanels zumindest teilweise auf der Basis der Strahlbreiteninformationen für jeden PRS-Strahl konfiguriert ist.

14. Nichtflüchtiges Speichermedium mit darauf gespeichertem Programmcode, wobei der Programmcode ausgelegt ist zum Konfigurieren mindestens eines Prozessors in einem UE (User Equipment) zum Durchführen des Verfahrens nach einem der Ansprüche 1 bis 8, wenn der Programmcode von dem mindestens einen Prozessor ausgeführt wird.

## Revendications

1. Procédé réalisé par un équipement utilisateur, UE, pour positionner l'UE, comprenant :
la réception (1602) d'une configuration de signal de référence de positionnement, PRS, pour recevoir des faisceaux de PRS, la configuration de PRS comprenant un angle d'azimut, un angle d'élévation et des informations de largeur de faisceau pour chaque faisceau de PRS :
la sélection (1608) d'antennes pour recevoir les faisceaux de PRS sur la base des informations de largeur de faisceau de chaque faisceau de PRS ;
la réception (1604) des faisceaux de PRS sur la base de la configuration de PRS ; et
la réalisation (1606) de mesures de positionnement avec les faisceaux de PRS ;
dans lequel la sélection des antennes pour recevoir les faisceaux de PRS sur la base des informations de largeur de faisceau pour chaque faisceau de PRS comprend :
a) la sélection d'un premier nombre d'antennes pour recevoir un faisceau de PRS lorsque les informations de largeur de faisceau indiquent qu'au moins l'une d'une largeur de faisceau, d'une incertitude de direction de ligne de visée et d'une incertitude de largeur de faisceau du faisceau de PRS est supérieure à un seuil, et la sélection d'un second nombre d'antennes pour recevoir le faisceau de PRS lorsque les informations de largeur de faisceau de PRS indiquent qu'au moins l'une de la largeur du faisceau, de l'incertitude de direction de ligne de visée et de l'incertitude de largeur de faisceau du faisceau de PRS est inférieure au seuil, dans lequel le premier nombre d'antennes est inférieur au second nombre d'antennes ; ou
b) la réduction d'un nombre d'antennes utilisées pour recevoir un faisceau de PRS lorsque les informations de largeur de faisceau du faisceau de PRS indiquent qu'un ou plusieurs lobes latéraux et lobe arrière associés au faisceau de PRS présentent une atténuation de puissance par rapport à une ligne de visée du faisceau de PRS qui est supérieure à un seuil, et les mesures de positionnement comprennent des mesures de positionnement basées sur le temps.

2. Procédé selon la revendication 1, dans lequel les informations de largeur de faisceau pour chaque faisceau de PRS comprennent une largeur de faisceau de chaque faisceau.

3. Procédé selon la revendication 2, dans lequel la largeur de faisceau de chaque faisceau est fournie sur la base d'une atténuation de puissance dans un lobe principal du faisceau de PRS

4. Procédé selon la revendication 1, dans lequel les informations de largeur de faisceau de chaque faisceau de PRS comprennent une incertitude de direction de ligne de visée et une incertitude de largeur de faisceau.

5. Procédé selon la revendication 4, dans lequel l'incertitude de direction de ligne de visée et l'incertitude de largeur de faisceau sont fournies sur la base d'une atténuation de puissance dans un lobe principal du faisceau de PRS.

6. Procédé selon la revendication 1, dans lequel les informations de largeur de faisceau de chaque faisceau de PRS comprennent des informations de faisceau pour un ou plusieurs lobes latéraux et lobe arrière associés à chaque faisceau de PRS.

7. Procédé selon la revendication 6, dans lequel les informations de faisceau des un ou plusieurs lobes latéraux et lobe arrière associés à chaque faisceau de PRS comprennent une atténuation de puissance relative à une ligne de visée de chaque faisceau de PRS.

8. Procédé selon la revendication 1, dans lequel les faisceaux de PRS sont émis dans une bande de fréquences d'ondes millimétriques, et dans lequel l'UE comprend de multiples panneaux d'antenne ; dans lequel la sélection d'un nombre d'antennes pour recevoir les faisceaux PRS sur la base des informations de largeur de faisceau de chaque faisceau de PRS comprend la sélection d'un nombre de panneaux d'antenne sur la base au moins en partie des informations de largeur de faisceau de chaque faisceau de PRS.

9. Équipement utilisateur, UE configuré pour le positionnement, comprenant :
un émetteur-récepteur sans fil configuré pour communiquer sans fil avec des entités dans un réseau sans fil ;
au moins une mémoire ;
au moins un processeur couplé à l'émetteur-récepteur sans fil et à l'au moins une mémoire, dans lequel l'au moins un processeur est configuré pour :
recevoir (1602) une configuration de signal de référence de positionnement, PRS, pour recevoir des faisceaux de PRS, la configuration de PRS comprenant un angle d'azimut, un angle d'élévation et des informations de largeur de faisceau pour chaque faisceau de PRS :
sélectionner (1608) des antennes pour recevoir les faisceaux de PRS sur la base des informations de largeur de faisceau de chaque faisceau de PRS ;
recevoir (1604) les faisceaux de PRS sur la base de la configuration de PRS ; et
réaliser (1606) des mesures de positionnement avec les faisceaux de PRS ;
dans lequel l'au moins un processeur pour sélectionner les antennes pour recevoir les faisceaux de PRS sur la base des informations de largeur de faisceau pour chaque faisceau de PRS, est configuré pour :
a) sélectionner un premier nombre d'antennes pour recevoir un faisceau de PRS lorsque les informations de largeur de faisceau indiquent qu'au moins l'une d'une largeur de faisceau, d'une incertitude de direction de ligne de visée et d'une incertitude de largeur de faisceau du faisceau de PRS est supérieure à un seuil et sélectionner un second nombre d'antennes pour recevoir le faisceau de PRS lorsque les informations de largeur de faisceau de PRS indiquent qu'au moins l'une de la largeur du faisceau, de l'incertitude de direction de ligne de visée et de l'incertitude de largeur de faisceau du faisceau de PRS est inférieure au seuil, dans lequel le premier nombre d'antennes est inférieur au second nombre d'antennes ; ou
b) réduire un nombre d'antennes utilisées pour recevoir un faisceau de PRS lorsque les informations de largeur de faisceau du faisceau de PRS indiquent qu'un ou plusieurs lobes latéraux et lobe arrière associés au faisceau de PRS présentent une atténuation de puissance par rapport à une ligne de visée du faisceau de PRS qui est supérieure à un seuil, et les mesures de positionnement comprennent des mesures de positionnement basées sur le temps.

10. UE selon la revendication 9, dans lequel les informations de largeur de faisceau de chaque faisceau de PRS comprennent une largeur de faisceau de chaque faisceau, de préférence dans lequel la largeur du faisceau de chaque faisceau est fournie sur la base d'une atténuation de puissance dans un lobe principal du faisceau de PRS.

11. UE selon la revendication 9, dans lequel les informations de largeur de faisceau de chaque faisceau de PRS comprennent une incertitude de direction de visée et une incertitude de largeur de faisceau, de préférence dans lequel l'incertitude de direction de ligne de visée et l'incertitude de largeur de faisceau sont fournies sur la base d'une atténuation de puissance dans un lobe principal du faisceau de PRS.

12. UE selon la revendication 9, dans lequel les informations de largeur de faisceau de chaque faisceau de PRS comprennent des informations de faisceau pour un ou plusieurs lobes latéraux et lobe arrière associés à chaque faisceau de PRS, de préférence dans lequel les informations de faisceau des un ou plusieurs lobes latéraux et lobe arrière associés à chaque faisceau de PRS comprennent une atténuation de puissance relative à une ligne de visée de chaque faisceau de PRS.

13. UE selon la revendication 9, dans lequel les faisceaux de PRS sont émis dans une bande de fréquences d'ondes millimétriques, et dans lequel l'UE comprend de multiples panneaux d'antenne ; dans lequel l'au moins un processeur pour sélectionner un nombre d'antennes pour recevoir les faisceaux PRS sur la base des informations de largeur de faisceau de chaque faisceau de PRS est configuré en outre pour sélectionner un nombre de panneaux d'antenne sur la base au moins en partie des informations de largeur de faisceau de chaque faisceau de PRS.

14. Support de stockage non transitoire stockant un code de programme, le code de programme servant à configurer au moins un processeur dans un équipement utilisateur, UE, afin de réaliser le procédé selon l'une quelconque des revendications 1 à 8, une fois le code de programme exécuté par l'au moins un processeur.
